(19) Europäisches Patentamt
European Patent Office
Office européen des brevets

(11) **EP 4 447 585 A1**

(12) **EUROPEAN PATENT APPLICATION**
published in accordance with Art. 153(4) EPC

(43) Date of publication:
**16.10.2024 Bulletin 2024/42**

(21) Application number: **22915012.3**

(22) Date of filing: **29.12.2022**

(51) International Patent Classification (IPC):
**H04W 72/04** (2023.01)

(52) Cooperative Patent Classification (CPC):
**H04W 72/04; H04W 72/12; H04W 72/232**

(86) International application number:
**PCT/CN2022/143218**

(87) International publication number:
**WO 2023/125762 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.12.2021 CN 202111672841**

(71) Applicant: **Huawei Technologies Co., Ltd.
Shenzhen, Guangdong 518129 (CN)**

(72) Inventors:
• **GAO, Fei
Shenzhen, Guangdong 518129 (CN)**
• **LIU, Xianda
Shenzhen, Guangdong 518129 (CN)**
• **JIAO, Shurong
Shenzhen, Guangdong 518129 (CN)**
• **YANG, Yubo
Shenzhen, Guangdong 518129 (CN)**

(74) Representative: **Epping - Hermann - Fischer
Patentanwaltsgesellschaft mbH
Schloßschmidstraße 5
80639 München (DE)**

(54) **COMMUNICATION METHOD AND APPARATUS**

(57) A communication method and apparatus are provided, so that a terminal device determines whether DCI obtained through monitoring is repeatedly transmitted on a PDCCH or individually transmitted on a PDCCH. A network device determines first configuration information based on a first condition, and sends the first configuration information to a first terminal device. The first configuration information includes information indicating the first terminal device to monitor a PDCCH candidate based on a span, and includes configuration information of a first PDCCH candidate and a second PDCCH candidate. The first condition is that the first PDCCH candidate and the second PDCCH candidate do not meet at least one of a same time-frequency resource, a same scrambling sequence, a same control resource set, and a same DCI payload size. The first PDCCH candidate and the second PDCCH candidate are located in a same span other than a first span in a slot, the first PDCCH candidate is used for individual transmission, and the second PDCCH candidate is any PDCCH candidate in linked PDCCH candidates for repetition transmission.

FIG. 9

**Description**

**CROSS-REFERENCE TO RELATED APPLICATIONS**

This application claims priority to Chinese Patent Application No. 202111672841.3, filed with the China National Intellectual Property Administration on December 31, 2021 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a new radio (new radio, NR) system, to improve transmission reliability of downlink control information (downlink control information, DCI), PDCCH repetition (PDCCH repetition) transmission is used, where one DCI is transmitted twice. In a repetition transmission scenario, at least one of two linked physical downlink control channel (physical downlink control channel, PDCCH) candidates corresponding to repeatedly transmitted DCI and one individually transmitted PDCCH may meet four conditions (a same time-frequency resource, a same scrambling sequence, a same control resource set, and a same DCI payload size) for one blind detection. This case may be referred to as a transmission reference point ambiguity scenario. However, to ensure that a network device and a terminal device have consistent understanding in the transmission reference point ambiguity scenario, in other words, the network device and the terminal device determine a consistent transmission reference point, to correctly perform data transmission, the protocol specifies that both the network device and the terminal device determine the transmission reference point by using a method of PDCCH repetition transmission.

Currently, a manner in which the terminal device monitors a PDCCH candidate is monitoring based on a span (span). Each slot is divided into one or more spans based on a PDCCH monitoring occasion (PDCCH monitoring occasion, PDCCH MO), and each span includes one or more PDCCH candidates. However, when determining whether two PDCCH candidates are counted as one blind detection, the terminal device needs to determine whether each PDCCH candidate and another PDCCH candidate meet the four conditions for one blind detection. In this way, all configured PDCCH candidates need to be traversed, and consequently, processing complexity of the terminal device is very high. To reduce the processing complexity, the protocol specifies that some terminal devices may not determine, in a span other than a first span in a slot, whether two PDCCH candidates are counted as one blind detection.

However, when the terminal device does not determine, in a span other than a first span in a slot, whether two PDCCH candidates are counted as one blind detection, when a configuration of one linked PDCCH corresponding to repeatedly transmitted DCI and a configuration of one individually transmitted PDCCH meet the four conditions for one blind detection, because the terminal device does not perform the determining, the terminal device cannot determine whether DCI obtained through monitoring is repeatedly transmitted on the PDCCH or individually transmitted on the PDCCH. In this case, ambiguity of determining a transmission reference point still exists, and consequently data transmission is affected.

**SUMMARY**

This application provides a communication method and apparatus, so that a terminal device can determine whether DCI obtained through monitoring is repeatedly transmitted on a PDCCH or individually transmitted on a PDCCH.

According to a first aspect, this application provides a communication method. The method may include: A network device determines first configuration information based on a first condition, and then sends the first configuration information to a first terminal device. The first configuration information includes information indicating the first terminal device to monitor a PDCCH candidate based on a span, and includes configuration information of a first PDCCH candidate and a second PDCCH candidate, and the first condition is that the first PDCCH candidate and the second PDCCH candidate do not meet at least one of a same time-frequency resource, a same scrambling sequence, a same control resource set, and a same DCI payload size, where the first PDCCH candidate and the second PDCCH candidate are located in a span other than a first span in a slot, the first PDCCH candidate and the second PDCCH candidate are located in the same span, the first PDCCH candidate is a PDCCH for individual transmission, and the second PDCCH candidate is any PDCCH candidate in linked PDCCH candidates for repetition transmission.

According to the foregoing method, the first terminal device can accurately determine whether DCI obtained through monitoring is repeatedly transmitted on a PDCCH or individually transmitted on a PDCCH, to avoid a problem of ambiguity of determining a reference point of scheduled data.

In a possible design, before the network device determines the first configuration information based on the first condition, the network device may receive first capability information from the first terminal device, where the first capability information indicates that the first terminal device does not support to determine, in a span other than a first span, whether two PDCCH candidates have a same time-frequency resource, a same scrambling sequence, a same control resource set, and a same DCI payload size. In this way, the network device can configure accurate first configuration information for the first terminal device based on a capability of the first terminal device.

In a possible design, the network device may further receive second capability information from a second terminal device, where the second capability information indicates that the second terminal device supports to determine, in a span other than a first span, whether two PDCCH candidates have a same time-frequency resource, a same scrambling sequence, a same control resource set, and a same DCI payload size; and the network device determines second configuration information based on the second capability information, where the second configuration information includes indicating the second terminal device to monitor a PDCCH candidate based on a span, and includes configuration information of a third PDCCH candidate and a fourth PDCCH candidate, and the third PDCCH candidate and the fourth PDCCH candidate have a same time-frequency resource, a same scrambling sequence, a same control resource set, and a same DCI payload size, where the third PDCCH candidate and the fourth PDCCH candidate are located in a span other than a first span in a slot, the third PDCCH candidate and the fourth PDCCH candidate are located in the same span, the third PDCCH candidate is a PDCCH for individual transmission, and the fourth PDCCH candidate is any PDCCH candidate in linked PDCCH candidates for repetition transmission. In this way, the network device can configure accurate second configuration information for the second terminal device based on a capability of the second terminal device.

According to a second aspect, this application provides a communication method. The method may include: A first terminal device receives first configuration information from a network device, where the first configuration information includes information indicating the first terminal device to monitor a PDCCH candidate based on a span, and includes configuration information of a first PDCCH candidate and a second PDCCH candidate, and the first PDCCH candidate and the second PDCCH candidate do not meet at least one of a same time-frequency resource, a same scrambling sequence, a same control resource set, and a same DCI payload size, where the first PDCCH candidate and the second PDCCH candidate are located in a span other than a first span in a slot, the first PDCCH candidate and the second PDCCH candidate are located in the same span, the first PDCCH candidate is a PDCCH for individual transmission, and the second PDCCH candidate is any PDCCH candidate in linked PDCCH candidates for repetition transmission; and then the first terminal device performs decoding separately on the first PDCCH candidate and the second PDCCH candidate; or when determining that the first PDCCH candidate and the second PDCCH candidate meet some conditions of a same time-frequency resource, a same scrambling sequence, a same control resource set, and a same DCI payload size, the first terminal device determines that the configuration information that is of the first PDCCH candidate and the second PDCCH candidate and that is included in the first configuration information is error information. According to the foregoing method, the first terminal device can accurately determine whether DCI obtained through monitoring is repeatedly transmitted on a PDCCH or individually transmitted on a PDCCH, to avoid a problem of ambiguity of determining a reference point of scheduled data.

In a possible design, before the first terminal device receives the first configuration information from the network device, the first terminal device sends first capability information to the network device, where the first capability information indicates that the first terminal device does not support to determine, in a span other than a first span, whether two PDCCH candidates have a same time-frequency resource, a same scrambling sequence, a same control resource set, and a same DCI payload size. In this way, the network device can configure accurate first configuration information based on a capability of the first terminal device.

In a possible design, after the first terminal device determines that the configuration information that is of the first PDCCH candidate and the second PDCCH candidate and that is included in the first configuration information is error information, the first terminal device does not perform decoding on the first PDCCH candidate and/or the second PDCCH candidate, or skips decoding (skips decoding), or the first terminal device does not perform decoding on all the linked PDCCH candidates for repetition transmission. In this way, the first terminal device can avoid a problem of ambiguity of determining a reference point of scheduled data.

According to a third aspect, this application provides a communication method. The method may include: A second terminal device receives second configuration information from a network device, where the second configuration information includes information indicating the second terminal device to monitor a physical downlink control channel PDCCH candidate based on a span, and includes configuration information of a third PDCCH candidate and a fourth PDCCH candidate, and the third PDCCH candidate and the fourth PDCCH candidate have a same time-frequency resource, a same scrambling sequence, a same control resource set, and a same downlink control information DCI payload size, where the third PDCCH candidate and the fourth PDCCH candidate are located in a span other than a first span in a slot, the third PDCCH candidate and the fourth PDCCH candidate are located in the same span, the third PDCCH candidate is a PDCCH for individual transmission, and the fourth PDCCH candidate is any PDCCH candidate in linked PDCCH candidates for repetition transmission; then the second terminal device determines, based on the second configuration information, that the third PDCCH candidate and the fourth PDCCH candidate meet some conditions of a same time-frequency resource, a same scrambling sequence, a same control resource set, and a same DCI payload size; and the second terminal device performs decoding on the third PDCCH candidate and/or the fourth PDCCH candidate.

According to the foregoing method, the second terminal device can accurately determine whether DCI obtained through monitoring is repeatedly transmitted on a PDCCH or individually transmitted on a PDCCH, to avoid a problem of ambiguity of determining a reference point of scheduled data.

In a possible design, before the second terminal device receives the second configuration information from the network device, the second terminal device may send second capability information to the network device, where the second capability information indicates that the second terminal device supports to determine, in a span other than a first span, whether two PDCCH candidates have a same time-frequency resource, a same scrambling sequence, a same control resource set, and a same DCI payload size. In this way, the network device can accurately configure the second configuration information for the second terminal device based on a capability of the second terminal device.

In a possible design, some conditions of a same time-frequency resource, a same scrambling sequence, a same control resource set, and a same DCI payload size, that the third PDCCH candidate and the fourth PDCCH candidate meet, are conditions determined by the network device and the second terminal device through negotiation, or conditions predefined in a communication protocol.

According to a fourth aspect, this application further provides a communication apparatus. The communication apparatus may be a network device, and the communication apparatus has a function of implementing the method in the first aspect or the possible design examples of the first aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions in the first aspect or the possible design examples of the first aspect. For details, refer to detailed descriptions in the method examples. Details are not described herein again.

In a possible design, a structure of the communication apparatus includes a transceiver and a processor, and optionally, further includes a memory. The transceiver is configured to receive and send information, a message, or data, and communicate and interact with another device in a communication system. The processor is configured to support the communication apparatus in performing corresponding functions in the first aspect or the possible design examples of the first aspect. The memory is coupled to the processor, and stores program instructions and data necessary for the communication apparatus.

According to a fifth aspect, this application further provides a communication apparatus. The communication apparatus may be a first terminal device, and the communication apparatus has a function of implementing the method in the second aspect or the possible design examples of the second aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions in the second aspect or the possible design examples of the second aspect. For details, refer to detailed descriptions in the method examples. Details are not described herein again.

In a possible design, a structure of the communication apparatus includes a transceiver and a processor, and optionally, further includes a memory. The transceiver is configured to receive and send information, a message, or data, and communicate and interact with another device in a communication system. The processor is configured to support the communication apparatus in performing corresponding functions in the second aspect or the possible design examples of the second aspect. The memory is coupled to the processor, and stores program instructions and data that are necessary for the communication apparatus.

According to a sixth aspect, this application further provides a communication apparatus. The communication apparatus may be a second terminal device, and the communication apparatus has a function of implementing the method in the third aspect or the possible design examples of the third aspect. The function may be implemented by hardware, or may be implemented by hardware executing corresponding software. The hardware or the software includes one or more modules corresponding to the foregoing function.

In a possible design, a structure of the communication apparatus includes a transceiver unit and a processing unit. These units may perform corresponding functions in the third aspect or the possible design examples of the third aspect. For details, refer to detailed descriptions in the method examples. Details are not described herein again.

In a possible design, a structure of the communication apparatus includes a transceiver and a processor, and optionally, further includes a memory. The transceiver is configured to receive and send information, a message, or data, and communicate and interact with another device in a communication system. The processor is configured to support the communication apparatus in performing corresponding functions in the third aspect or the possible design examples of the third aspect. The memory is coupled to the processor, and stores program instructions and data that are necessary for the communication apparatus.

According to a seventh aspect, an embodiment of this application provides a communication system, and the communication system may include the network device, the first terminal device, the second terminal device, and the like mentioned above.

According to an eighth aspect, an embodiment of this application provides a computer-readable storage medium. The computer-readable storage medium stores program instructions, and when the program instructions are run on a computer, the computer is enabled to perform the method in the first aspect and any possible design of the first aspect, the second aspect and any possible design of the second aspect, or the third aspect and any possible design of the third aspect of embodiments of this application. For example, the computer-readable storage medium may be any usable medium that can be accessed by the computer. The following provides an example but does not impose a limitation: The computer-readable storage medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store expected program code in a form of an instruction or a data structure and that can be accessed by the computer.

According to a ninth aspect, an embodiment of this application provides a computer program product, including computer program code or instructions. When the computer program code or the instructions are run on a computer, the method in the first aspect or any possible design of the first aspect, the second aspect or any possible design of the second aspect, or the third aspect or any possible design of the third aspect is performed.

According to a tenth aspect, this application further provides a chip, including a processor. The processor is coupled to a memory, and is configured to read and execute program instructions stored in the memory, so that the chip implements the method in the first aspect or any possible design of the first aspect, the second aspect or any possible design of the second aspect, or the third aspect or any possible design of the third aspect.

For each aspect of the fourth aspect to the tenth aspect and a technical effect that may be achieved in each aspect, refer to the foregoing descriptions of the technical effect that may be achieved in the first aspect or the possible solutions in the first aspect, or in the second aspect or the possible solutions in the second aspect, or in the third aspect or the possible solutions in the third aspect. Details are not described herein again.

## BRIEF DESCRIPTION OF DRAWINGS

FIG. 1a is a schematic of a communication scenario according to this application;
FIG. 1b is a schematic of another communication scenario according to this application;
FIG. 1c is a schematic of another communication scenario according to this application;
FIG. 1d is a schematic of another communication scenario according to this application;
FIG. 2 is a diagram in which a TRP 1 and a TRP 2 serve as cooperative base stations to simultaneously serve one terminal device according to this application;
FIG. 3 is a diagram of repetition transmission of PDCCH candidates between two SSSs according to this application;
FIG. 4 is a diagram of a reference point ambiguity scenario in which PDCCH repetition transmission and PDCCH individual transmission simultaneously exist according to this application;
FIG. 5 is a diagram of another reference point ambiguity scenario in which PDCCH repetition transmission and PDCCH individual transmission simultaneously exist according to this application;
FIG. 6 is a diagram of a PDCCH MO according to this application;
FIG. 7 is a diagram of determining a location of a span in a slot according to this application;
FIG. 8 is a diagram of a reference point ambiguity scenario according to this application;
FIG. 9 is a flowchart of a communication method according to this application;
FIG. 10 is a flowchart of another communication method according to this application;
FIG. 11 is a flowchart of another communication method according to this application;
FIG. 12 is a diagram of a structure of a communication apparatus according to this application; and
FIG. 13 is a diagram of a structure of a communication apparatus according to this application.

## DESCRIPTION OF EMBODIMENTS

The following further describes in detail this application with reference to the accompanying drawings.

Embodiments of this application provide a communication method and apparatus, so that a terminal device can determine whether DCI obtained through monitoring is repeatedly transmitted on a PDCCH or individually transmitted on a PDCCH. The method and the apparatus in this application are based on a same technical concept. Because problem-resolving principles of the method and the apparatus are similar, for implementation of the apparatus and the method, refer to each other. Repeated parts are not described.

In the descriptions of this application, the words such as "first" and "second" are merely used for distinguishing between descriptions, and cannot be understood as an indication or implication of relative importance, or cannot be understood as an indication of implication of an order.

In the descriptions of this application, "at least one (type)" means one or more (types), and "a plurality of (types)" means two or more (types).

The term "and/or" describes an association relationship between associated objects and may indicate three relationships. For example, A and/or B may indicate the following cases: Only A exists, both A and B exist, and only B exists. A and B may be singular or plural. The character "/" generally indicates an "or" relationship between the associated objects.

To describe the technical solutions in embodiments of this application more clearly, the following describes the communication method and apparatus according to embodiments of this application in detail with reference to the accompanying drawings.

The communication method provided in this application may be applied to a plurality of communication systems, for example, a long term evolution (long term evolution, LTE) system, a new radio (new radio, NR) system, a wireless local area network (wireless local area network, WLAN), a fifth generation (5th generation, 5G) communication system, a sixth generation (6th generation, 6G) communication system, or another future evolved system. For example, this application is applicable to the following plurality of communication scenarios: point-to-point transmission between a network device and a terminal device or between terminal devices, multi-hop or relay (relay) transmission between a network device and a terminal device, dual connectivity (dual connectivity, DC) or multi-connectivity between a plurality of network devices and terminal devices, and the like.

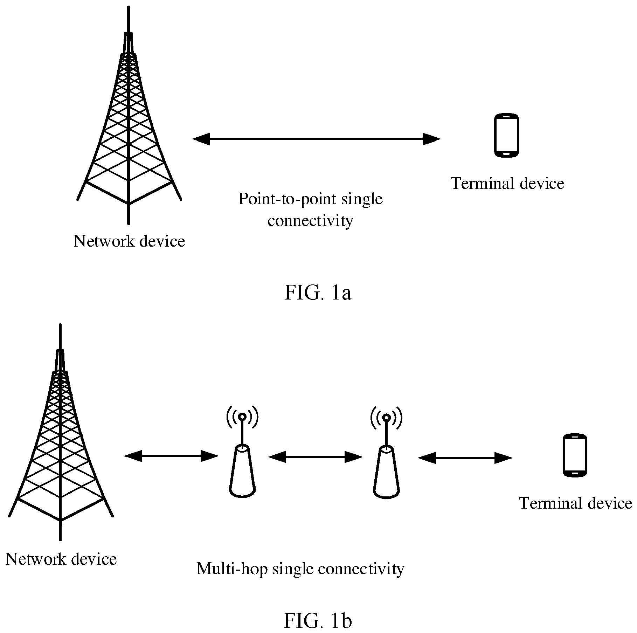

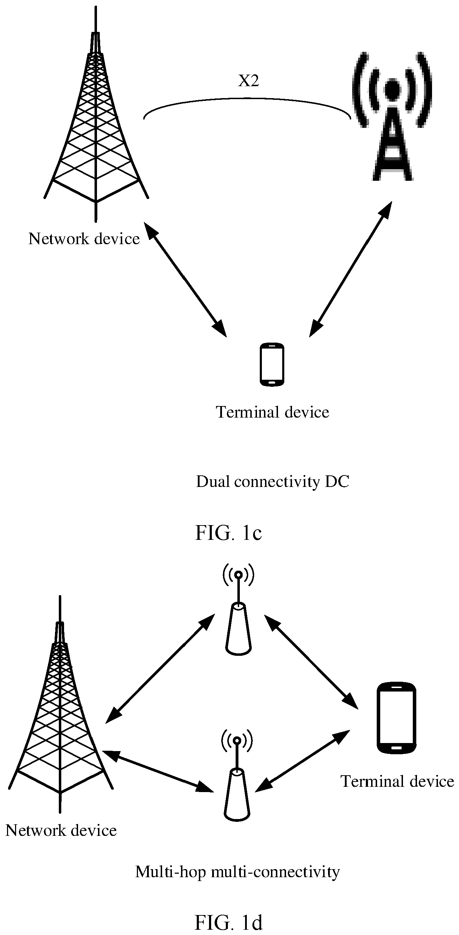

For example, FIG. 1a to FIG. 1d are schematics of communication scenarios to which communication methods according to embodiments of this application are applicable. Each communication scenario may include a network device and a terminal device. FIG. 1a shows a scenario of point-to-point single connectivity of a network device and a terminal device. FIG. 1b shows a scenario of multi-hop single connectivity of a network device and a terminal device. FIG. 1c shows a scenario of DC dual connectivity of a network device and a terminal device. FIG. 1d shows a scenario of multi-hop multi-connectivity of a network device and a terminal device. The network device is a device having a wireless transceiver function or a chip, a chip system, a functional module, or the like that can be disposed in the network device. The network device includes but is not limited to: a base station (base station, BS), an evolved NodeB (evolved nodeB, eNB), a generation nodeB (generation nodeB, gNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission and reception point, TRP, or transmission point, TP), and the like. Alternatively, the network device may be a network node that constitutes a gNB or a transmission point, for example, a baseband unit (BBU), or a distributed unit (distributed unit, DU).

In some deployments, the gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in the architecture, higher layer signaling such as RRC layer signaling or PHCP layer signaling may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may be a device with a wireless transceiver function, and may be deployed on land, including an indoor or outdoor device, a handheld device, or an in-vehicle device; or may be deployed on water (for example, a steamship); or may be deployed in the air (for example, an airplane, a balloon, or a satellite). The terminal device in embodiments of this application may include a handheld device, an in-vehicle device, a wearable device, or a computing device that has a wireless communication function, for example, may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a smart wearable device (smart glasses, a smartwatch, a smart headset, or the like), a wireless terminal in a smart home (smart home), or the like; or may be a chip, a chip module (or a chip system), or the like that can be disposed in the foregoing device. An application scenario is not limited in embodiments of this application. In this application, a terminal device with a wireless transceiver function and a chip, a chip system, a functional module, or the like that may be disposed in the foregoing terminal device are collectively referred to as a terminal device.

It should be noted that FIG. 1a to FIG. 1d are merely examples of communication scenarios (which may also be referred to as communication systems), and are not intended to limit a communication system to which this application is applicable. Transmission such as an uplink, a downlink, an access link, a backhaul (backhaul) link, and a sidelink (sidelink) in the foregoing communication scenarios is not limited in this application.

It should be noted that a quantity and types of devices shown in the communication scenarios shown in FIG. 1a to FIG. 1d are merely examples. There may be more devices in each communication scenario, for example, a core network device, which is not shown in FIG. 1a to FIG. 1d.

For ease of understanding, the following first briefly describes some related technologies in this application.

1. PDCCH candidate

The PDCCH candidate may be understood as a basic granularity of DCI blind detection by a terminal device. When the terminal device monitors only one DCI payload length on one PDCCH candidate, one PDCCH candidate corresponds to one DCI blind detection, or one PDCCH candidate corresponds to one monitored PDCCH candidate, or one PDCCH candidate is counted as a PDCCH candidate used for monitoring or one DCI detection process (including performing operations such as parsing, decoding, and determining of an information bit), and one PDCCH candidate corresponds to a specific physical resource on a CORESET.

A quantity of PDCCH candidates reflects complexity of detecting DCI by the terminal device or overheads of a DCI processing operation. A size and a location of a physical resource corresponding to each PDCCH candidate may be determined by using a location of a control channel element (control channel element, CCE) and a quantity of control channel elements.

2. PDCCH repetition transmission

The PDCCH repetition transmission is defined as follows: A coding/rate matching operation is repeatedly transmitted based on one PDCCH, and a same coded bit is repeatedly transmitted on another PDCCH. In each repetition transmission, a same aggregation level (aggregation level, AL) or a same quantity of CCEs is used, and a same coded bit and same DCI payload information (that is, DCI bit content is the same) are repeatedly transmitted.

A multi-TRP joint transmission mechanism may be used to improve DCI transmission reliability. Specifically, for a same DCI information bit (a source), after a coded bit is formed by using the foregoing coding scheme, the coded bit is separately sent by a plurality of TRPs on different time-frequency resources. A terminal device may separately receive a plurality of coded bits on the foregoing different time-frequency resources, and then perform a joint parsing operation to obtain the DCI information bit (source). For example, the terminal device separately performs channel estimation on the foregoing different time-frequency resources, demodulates a received signal, and obtains a likelihood value (soft value bit information) for combination. Through the foregoing operations, a signal-to-noise ratio (signal-to-noise ratio, SNR) of transmission can be improved, thereby improving DCI transmission reliability. In addition, through the foregoing operations, a problem that a transmission link from the terminal device to a specific TRP is interrupted due to a channel change and cannot transmit DCI can further be avoided.

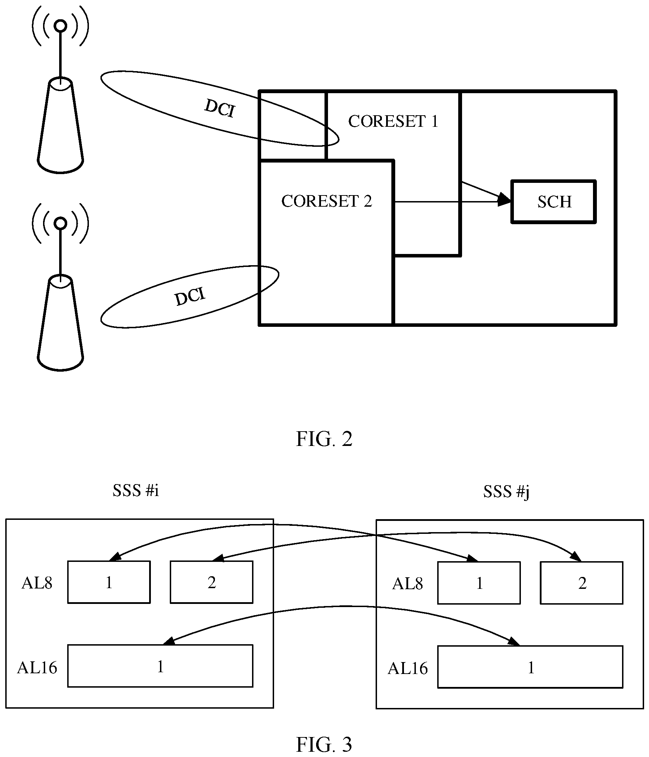

As shown in FIG. 2, a TRP 1 and a TRP 2 serve as cooperative base stations to simultaneously serve one terminal device. DCI sent by the TRP 1 corresponds to a control resource set (control resource set, CORESET) 1 (where a first quasi co-location assumption (quasi co-location assumption, QCL assumption) is configured, and corresponds to a feature of a channel from the terminal device to the TRP 1), and DCI delivered by the TRP 2 corresponds to a CORESET 2 (where a second QCL assumption is configured, and corresponds to a feature of a channel from the terminal device to the TRP 2). Two CORESETs may be configured to be complete overlapping, partial overlapping, or non-overlapping to improve DCI transmission flexibility and ensure frequency selective scheduling gains. Two DCIs separately delivered on the two CORESETs are respectively carried on two PDCCH candidates. Search space sets (search space sets, SSSs) to which the two PDCCH candidates belong are in a linkage (linkage/linked) relationship. Combination (namely, a soft combination operation) may be performed on soft value bit information received by the terminal device on the two PDCCH candidates. It may also be understood that the two PDCCH candidates have a linkage relationship. The DCI carried on the two PDCCH candidates is used for repetition transmission.

Further, to prevent the terminal device from performing excessive soft combination operations and reduce complexity of the terminal device, a linkage relationship between PDCCH candidates separately linked to two CORESETs needs to be defined. For PDCCH repetition transmission, the protocol currently supports that all PDCCH candidates in one SSS are used for PDCCH repetition transmission, and a PDCCH candidate used for sending an individual PDCCH is excluded. As shown in FIG. 3, a network device configures, by using a radio resource control (radio resource control, RRC) parameter, a linkage relationship on two SSSs used for PDCCH repetition transmission, that is, an SSS #i and an SSS #j may be referred to as linked SSSs. PDCCH candidates for PDCCH repetition transmission separately belong to two SSSs. It is assumed that SSS #i includes aggregation levels AL4 and AL8, and corresponding quantities of PDCCH candidates are 4 and 2, respectively. According to the definition of the PDCCH repetition transmission, PDCCH repetition transmission of the AL4 can be implemented only by using two PDCCH candidates of the AL4, but cannot be implemented by using one PDCCH candidate of the AL4 and one PDCCH candidate of the AL8. Therefore, it is assumed that a predefined mapping relationship of PDCCH repetition transmission exists, and a linkage relationship shown in FIG. 3 may be obtained. For the AL8, a PDCCH candidate index 1 of the SSS #i and a PDCCH candidate index 1 of the SSS #j are used together for PDCCH repetition transmission, and a PDCCH candidate index 2 of the SSS #i and a PDCCH candidate index 2 of the SSS #j are used together for PDCCH repetition transmission. The two pairs of PDCCHs are respectively referred to as linked PDCCH candidates. For the AL16, a PDCCH candidate index 1 of the SSS #i and a PDCCH candidate index 1 of the SSS #j are used together for PDCCH repetition transmission. It can be learned from the foregoing two examples that all PDCCH candidates in one SSS are used for PDCCH repetition transmission, and a PDCCH candidate used for sending an individual PDCCH is excluded. If the network device needs to send an individual PDCCH, the network device can send the individual PDCCH only by configuring another SSS, for example, an SSS #k.

3. Counted as (or considered as) one blind detection (count one)

The third generation partnership project (the 3rd generation partnership project, 3GPP) communication protocol TS38.213 specifies a calculation rule of whether one PDCCH candidate is counted as one blind detection (which may be referred to as a count one operation). "One blind detection" may be referred to as "one PDCCH candidate used for monitoring" or "counted as one PDCCH candidate used for monitoring" in the protocol. If both a PDCCH candidate 1 and a PDCCH candidate 2 simultaneously meet the following four conditions: a same aggregation level and a same start CCE location (which may also be understood as a same time-frequency resource), a same scrambling sequence (scrambling sequence), a same CORESET, and a same DCI payload size, the two PDCCH candidates may be counted as one blind detection. It may also be understood that the two PDCCH candidates are counted as one PDCCH candidate used for monitoring. If the two PDCCH candidates do not meet at least one of the foregoing four conditions, the two PDCCH candidates are not counted as one blind detection, or the two PDCCH candidates are not counted as one PDCCH candidate used for monitoring, or the two PDCCH candidates are counted as two blind detections, or the two PDCCH candidates are counted as two PDCCH candidates used for monitoring.

When a terminal device determines that two PDCCH candidates meet "count one" conditions, that is, simultaneously meet the foregoing four conditions, a quantity of blind detections corresponding to the two PDCCH candidates may be counted as one. In this way, the terminal device performs a decoding operation only once on the two PDCCH candidates. On the contrary, when the terminal device determines that two PDCCH candidates do not meet "count one" conditions, that is, cannot simultaneously meet the foregoing four conditions, a quantity of blind detections corresponding to the two PDCCH candidates may be counted as two. In this way, the terminal device performs a decoding operation on each of the two PDCCH candidates once, where the decoding operation is totally performed twice.

4. PDCCH repetition transmission reference point

For PDCCH individual transmission (individual PDCCH), a PDCCH candidate on which a PDCCH is detected serves as a reference point (which is also referred to as a transmission reference point or a reference PDCCH candidate (reference PDCCH candidate)). For PDCCH repetition transmission, a same PDCCH is sent on two linked PDCCH candidates, and a terminal device may obtain the PDCCH through monitoring only on the first PDCCH candidate, or may obtain the PDCCH through monitoring only on the second PDCCH candidate, or may obtain the PDCCH through monitoring on both the two PDCCH candidates. In this case, for reference point selection, for example, PUSCH preparation time (N2), CSI calculation time (Z), a counter downlink assignment indicator (counter downlink assignment indicator, C-DAI), or a total downlink assignment indicator (total downlink assignment indicator, T-DAI), there currently are some specifications in the protocol. For example, for the PUSCH preparation time (N2) and the CSI calculation time (Z), the protocol predefines that a PDCCH candidate with relatively late end time is used as a reference PDCCH candidate in time domain. For another example, for the C-DAI or the T-DAI, the protocol predefines that a PDCCH candidate with a relatively early PDCCH monitoring occasion (a start OFDM symbol) in time domain is used as a reference PDCCH candidate. For still another example, for a physical downlink shared channel (physical downlink shared channel, PDSCH) mapping type B, when a higher layer parameter ReferenceofSLIV-ForDCIFormat1_2 is configured for the terminal device, and when K0=0 of a PDSCH scheduled in a DCI format 1_2 is received, the protocol predefines that a PDCCH candidate with a relatively late PDCCH monitoring occasion (a start OFDM symbol) is used as a reference PDCCH candidate in time domain. It should be noted that the foregoing enumerated reference point selection is merely an example, and the reference point selection may be in another manner. This is not limited in this application.

5. Transmission reference point ambiguity scenario

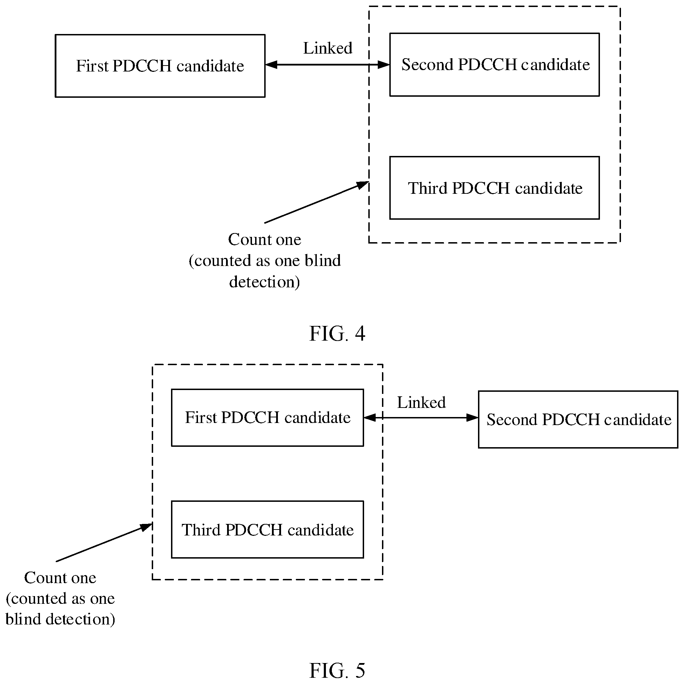

FIG. 4 or FIG. 5 shows a reference point ambiguity scenario in which PDCCH repetition transmission and PDCCH individual transmission simultaneously exist. A first PDCCH candidate and a second PDCCH candidate are a pair of PDCCH candidates for PDCCH repetition transmission, and are also referred to as a pair of linked PDCCH candidates. A third PDCCH candidate is a PDCCH candidate for PDCCH individual transmission. In FIG. 4, the second PDCCH candidate and the third PDCCH candidate meet count one conditions, that is, the second PDCCH candidate and the third PDCCH candidate are counted as one PDCCH candidate used for monitoring a PDCCH. A terminal device performs decoding once on a time-frequency resource corresponding to the second PDCCH candidate or the third PDCCH candidate. In FIG. 5, the third PDCCH candidate and the first PDCCH candidate meet count one conditions, that is, the first PDCCH candidate and the third PDCCH candidate are counted as one PDCCH candidate used for monitoring a PDCCH. A terminal device performs decoding once on a time-frequency resource corresponding to the first PDCCH candidate or the third PDCCH candidate.

In the foregoing scenario, if the terminal device obtains the PDCCH through monitoring only on the time-frequency resources on which the first PDCCH candidate and the third PDCCH candidate are located, but cannot obtain the PDCCH through monitoring on the second PDCCH candidate due to a poor channel environment, the terminal device cannot completely determine, through decoding, whether the detected PDCCH is sent through PDCCH repetition transmission or is sent through PDCCH individual transmission, thereby affecting subsequent scheduling of a reference point. For example, in the scenario shown in FIG. 5, the terminal device cannot determine whether the detected PDCCH is sent by a network device to the terminal device through PDCCH repetition transmission or PDCCH individual transmission. It is assumed that the detected PDCCH is sent by the network device to the terminal device through PDCCH repetition transmission, but the terminal device determines that the detected PDCCH is sent to the terminal device through PDCCH individual transmission. In this case, the network device and the terminal device may have different definitions of a reference point. For example, the network device determines that the second PDCCH candidate is a reference point, and the terminal device determines that the third PDCCH candidate is a reference point. Consequently, subsequent data transmission fails.

For the foregoing case, the standard meeting discusses and defines: in the scenarios shown in FIG. 4 and FIG. 5, the reference point is determined based on a definition manner of a reference point in PDCCH repetition transmission. In this way, the network device and the terminal device have consistent understandings of the reference point ambiguity scenario, to ensure correct data transmission.

6. Span (span)

The span (span) may also be referred to as a PDCCH monitoring span (PDCCH monitoring span). In R16, a rule for determining a span pattern (pattern) includes the following:

(1) Each span is included in an individual slot (slot). In other words, the span cannot cross a boundary of the slot.
(2) A span cannot overlap with another span.
(3) Each monitoring occasion (PDCCH monitoring occasion, PDCCH MO) is completely included in one span. In other words, one PDCCH MO cannot cross a boundary of the span. The PDCCH MO herein indicates duration during which one terminal device blindly detects a PDCCH, and is jointly determined by using one SSS monitoring start location and a CORESET linked to this monitored SSS.

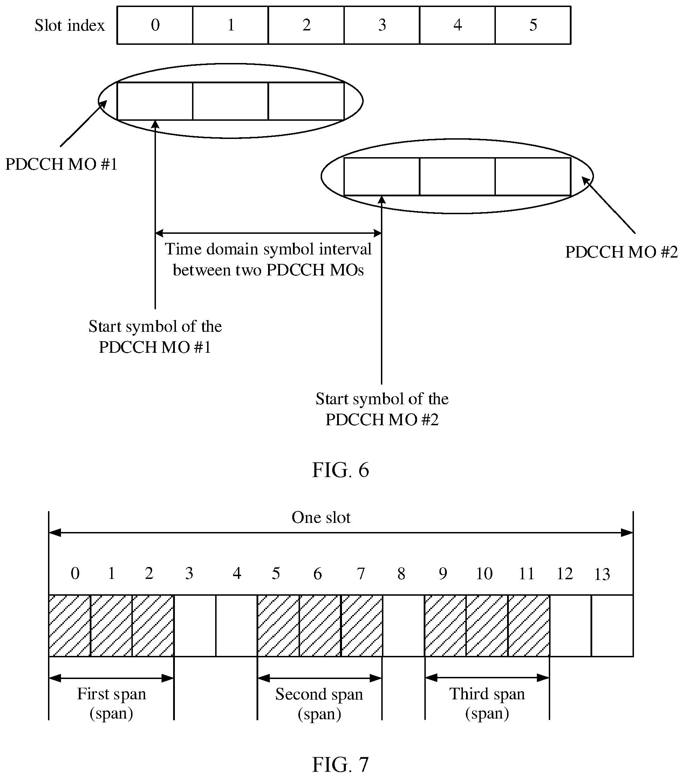

For example, a monitoring start location at which the terminal device monitors one SSS is a first symbol in one slot, and the SSS is bound to one CORESET whose duration is three orthogonal frequency division multiplexing (orthogonal frequency division multiplexing, OFDM) symbols. Therefore, a PDCCH MO for monitoring the SSS by the terminal device is the first three OFDM symbols in the slot, that is, the first OFDM symbol, a second OFDM symbol, and a third OFDM symbol. For example, a PDCCH MO #1, a PDCCH MO #2, and a time domain symbol interval (OFDM symbol) between the PDCCH MO #1 and the PDCCH MO #2 may be shown in FIG. 6. (4) The terminal device reports one or more (X, Y) combinations (combinations) for PDCCH monitoring, where one span pattern, span combination, or combination is represented as one (X, Y). X is a minimum time domain symbol interval between two span start symbols. Y represents a maximum length of one span, and a unit is a time domain OFDM symbol.

In R16, a monitoring capability of the terminal device is defined at the granularity (unit) of a span. As shown in the following table, Table 1 describes an upper limit of a quantity of blind detections corresponding to a span pattern (X, Y) in a bandwidth part (bandwidth part, BWP) of a serving cell on a given subcarrier, or an upper limit of a quantity of PDCCH candidates to be monitored, which may be denoted as $M_{\mathrm{PDCCH}}^{\max,(X,Y),\mu}$. Table 2 describes an upper limit of a quantity of non-overlapping CCEs corresponding to a span pattern (X, Y) in a BWP of a serving cell on a given subcarrier, which may be denoted as $C_{PDCCH}^{max,(X,Y),\mu}$ .

**Table 1**

| $M_{PDCCH}^{max,(X,Y),\mu}$ | | | |
|---|---|---|---|
| $\mu$ | (2, 2) | (4, 3) | (7, 3) |
| 0 | 14 | 28 | 44 |
| 1 | 12 | 24 | 36 |

**Table 2**

| $C_{PDCCH}^{max,(X,Y),\mu}$ | | | |
|---|---|---|---|
| $\mu$ | (2, 2) | (4, 3) | (7, 3) |
| 0 | 18 | 36 | 56 |
| 1 | 18 | 36 | 56 |

In R16, a method for determining a span pattern of one slot further includes the following rule: A terminal device may configure $\mu$ = 0 and $\mu$ =1 based on a subcarrier spacing to indicate one or more of supported PDCCH candidate monitoring capability combinations (X, Y) = (2, 2), (4, 3), and (7, 3). If the terminal device indicates that the supported PDCCH candidate monitoring capability is a plurality of (X, Y) combinations, and a PDCCH configuration causes a separation (separation) between every two consecutive PDCCH monitoring spans to be greater than or equal to X, where X is X in one or more (X, Y) combinations, the terminal device monitors a PDCCH candidate based on a (X, Y) combination corresponding to maximum $M_{PDCCH}^{max,(X,Y),\mu}$ and $C_{PDCCH}^{max,(X,Y),\mu}$ values that satisfy inequality conditions. For example, the terminal device sends signaling to a network device, to notify the network device that a supported PDCCH candidate monitoring capability is a combination (X, Y) = {(2, 2), (4, 3), (7, 3)}. The terminal device determines a span location in a slot based on a PDCCH configuration delivered by the network device or a rule for determining a span in R16, as shown in FIG. 7. A span in R16 is used as an example. A separation between a first span and a second span is X' = 5, and a separation between the second span and a third span is X' = 4, where 5 is greater than X = 4, 2, and 4 is greater than or equal to X = 4, 2. Therefore, a separation between two spans in one slot satisfies a separation greater than or equal to X = 4, 2, that is, satisfies a (X, Y) combinations (4, 3) and (2, 2). However, because $M_{PDCCH}^{max,(X,Y),\mu}$ and $C_{PDCCH}^{max,(X,Y),\mu}$ values corresponding to (4, 3) are greater than these values corresponding to (2, 2), the terminal device determines that (4, 3) is the span pattern of the slot. Based on this, the terminal device determines to monitor the PDCCH candidate based on the $M_{PDCCH}^{max,(X,Y),\mu}$ and $C_{PDCCH}^{max,(X,Y),\mu}$ values corresponding to (4, 3).

It should be noted that the foregoing described span in R16 is merely an example. This application may be further applied to a span in R15, for example, a rule for determining a span in R15, and for example, a rule described in a terminal device feature group 3-5b (feature group 3-5b). Currently, a terminal device determines, based on an RRC parameter configuration, that one of a pair of linked PDCCH candidates and an individually transmitted PDCCH candidate meet count one conditions. In this case, regardless of whether DCI obtained through monitoring on the overlapping resource is sent on an individual transmitted PDCCH or sent on the linked PDCCH, it is understood in a manner of sending on the linked PDCCH, that is, a method for determining a corresponding reference point is determining in the manner of sending on the linked PDCCH (namely, a PDCCH repetition transmission reference point).

However, currently, a manner in which the terminal device monitors a PDCCH candidate is monitoring based on a span. Each slot is divided into one or more spans, and one or more PDCCH candidates are included in each span. Because determining of "count one" requires the terminal device to perform traversal determining on PDCCH candidates configured by a network device, that is, each PDCCH candidate needs to perform determining of four conditions of "count one" with another PDCCH candidate, to determine whether two PDCCH candidates participating in the determining meet the four conditions simultaneously. In this case, the terminal device needs to traverse all configured PDCCH candidates, causing extremely high processing complexity of the terminal device. To reduce the processing complexity, the standard reaches the following conclusion: Some terminal devices may not perform a one blind detection determining operation, namely, a "count one" operation, in a span other than a first span in one slot of a primary cell. However, when the terminal device does not determine, in a span other than a first span in a slot, whether two PDCCH candidates are counted as one blind detection, when a configuration of a linked PDCCH candidate corresponding to repeatedly transmitted DCI and a configuration of one individually transmitted PDCCH candidate meet four conditions for one blind detection, because the terminal device does not perform the determining, the terminal device separately performs monitoring processing on time-frequency resources that meet "count one" based on a configuration of an SSS of the linked PDCCH candidate and a configuration of an SS of the individually transmitted PDCCH candidate, to separately obtain one DCI through monitoring, and the terminal device cannot determine whether the DCI obtained through monitoring is repeatedly transmitted on the PDCCH or individually transmitted on the PDCCH. In this case, ambiguity of determining a transmission reference point still exists, that is, reference point ambiguity exists, and consequently data transmission is affected.

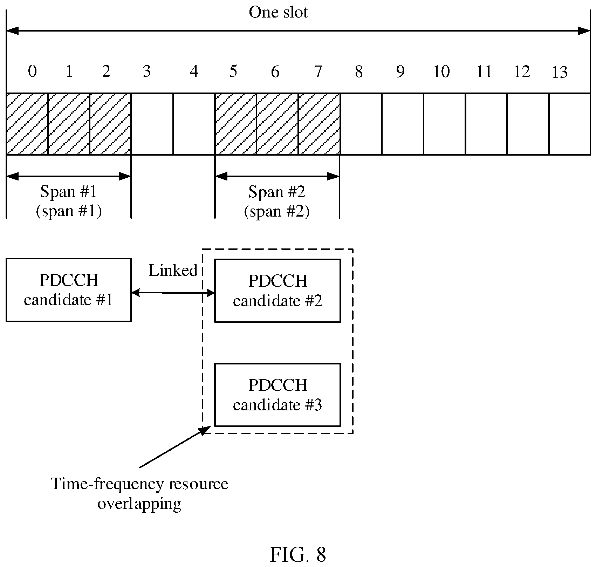

For example, as shown in FIG. 8, a terminal device determines, based on a PDCCH configuration delivered by a network device and a rule predefined in a protocol, that there are two spans in one slot: a span #1 and a span #2. A pair of PDCCH candidates with a linkage (linkage) relationship for PDCCH repetition transmission are respectively in the two spans, that is, inter-span PDCCH repetition (inter-span PDCCH repetition). The network device configures, in the span #2, a PDCCH candidate #3 (individual PDCCH candidate) for individual transmission. It is assumed that the network device configures the PDCCH candidate #3 and a linked PDCCH candidate #2 to meet "count one" conditions. According to a protocol specification, the terminal device does not perform, in the span #2, a determining operation of whether four conditions of "count one" are met, that is, does not determine whether the two PDCCH candidates use a same scrambling code, does not determine whether search space sets (SSSs) to which the two PDCCH candidates belong are linked to a same CORESET, does not determine whether payload sizes of DCI formats configured in search space sets (SSSs) to which the two PDCCH candidates belong are the same, and does not determine whether time-frequency resources respectively corresponding to the two PDCCH candidates are the same (that is, whether a same CCE set is used). In this case, the terminal device performs processing based on higher layer parameter configurations of SSSs to which the two PDCCH candidates belong, that is, performs a decoding operation twice separately. The terminal device finds, based on a high layer parameter, that DCI obtained through monitoring on the PDCCH candidate #2 and the PDCCH candidate #3 is repeatedly transmitted on a PDCCH and also is individually transmitted on a PDCCH, and cannot determine which type of transmission is used. Consequently, a problem of ambiguity of determining a reference point for scheduled data transmission exists, and normal data transmission cannot be performed between the terminal device and the network device.

In view of this, this application provides a communication method, to resolve a problem of determining ambiguity of a reference point for data transmission, so that a terminal device and a network device accurately communicate data.

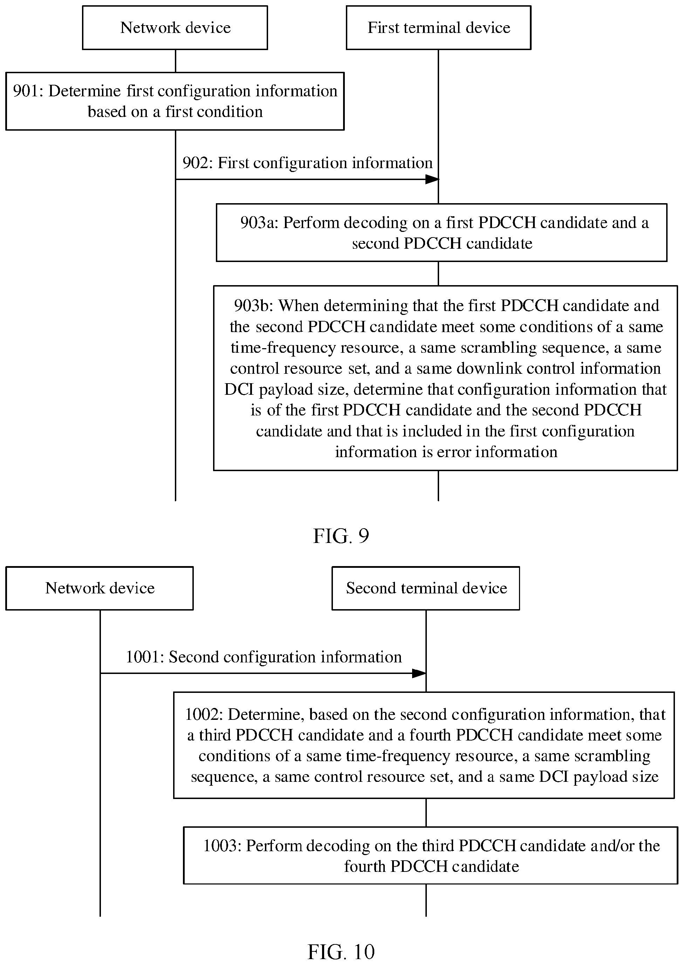

FIG. 9 shows a communication method according to an embodiment of this application. The method is applicable to the scenarios shown in FIG. 1a to FIG. 1d. Refer to FIG. 9. A specific procedure of the method may include the following steps.

Step 901: A network device determines first configuration information based on a first condition, where the first configuration information includes information indicating a first terminal device to monitor a PDCCH candidate based on a span, and includes configuration information of a first PDCCH candidate and a second PDCCH candidate.

In an embodiment, the first PDCCH candidate and the second PDCCH candidate are located in a span other than a first span in a slot, the first PDCCH candidate and the second PDCCH candidate are located in the same span, the first PDCCH candidate is a PDCCH for individual transmission, and the second PDCCH candidate is a PDCCH candidate in linked PDCCH candidates for repetition transmission. In an implementation of this application, the second PDCCH candidate may be any PDCCH candidate in the linked PDCCH candidates for repetition transmission.

The first condition is that the first PDCCH candidate and the second PDCCH candidate do not meet at least one of a same time-frequency resource, a same scrambling sequence, a same control resource set, and a same DCI payload size.

For example, that the first PDCCH candidate and the second PDCCH candidate do not meet at least one of a same time-frequency resource, a same scrambling sequence, a same control resource set, and a same downlink control information DCI payload size specifically means that the first PDCCH candidate and the second PDCCH candidate do not meet at least one of the following:

a time-frequency resource of the first PDCCH candidate is the same as a time-frequency resource of the second PDCCH candidate; for example, a CCE set corresponding to the first PDCCH candidate is the same as a CCE set corresponding to the second PDCCH candidate; and for another example, in time domain, a quantity of start symbols and a quantity of continuous OFDM symbols of a control resource set in which the first PDCCH candidate is located are the same as a quantity of start symbols and a quantity of continuous OFDM symbols of a control resource set in which the second PDCCH candidate is located, and in frequency domain, a physical resource block (physical resource block, PRB) corresponding to the first PDCCH candidate is the same as a PRB corresponding to the second PDCCH candidate;

a scrambling sequence of the first PDCCH candidate is the same as a scrambling sequence of the second PDCCH candidate; and for example, a sequence used to scramble downlink control information carried on the first PDCCH candidate is the same as a sequence used to scramble downlink control information carried on the second PDCCH candidate;

a control resource set of the first PDCCH candidate is the same as a control resource set of the second PDCCH candidate; and for example, an index of a control resource set linked to an SSS to which the first PDCCH candidate belongs is the same as an index of a control resource set linked to an SSS to which the second PDCCH candidate belongs; and a payload size of DCI monitored on the first PDCCH candidate is the same as a payload size of DCI monitored on the second PDCCH candidate; and for example, a payload size of DCI for decoding by the terminal device on the first PDCCH candidate is the same as a payload size of DCI for decoding by the terminal device on the second PDCCH candidate, where the DCI payload size may be determined based on a higher-layer parameter configuration of an SSS to which the PDCCH candidate belongs, certainly, the DCI payload size may also be determined in another manner, and this is not limited in this application.

In this embodiment, the first condition is used to restrict the network device to perform scheduling limitation. That is, the first condition may be predefined in a protocol. In an optional implementation, the first condition may be further described as follows: The terminal device does not expect to be configured to process "the following scenario", or the terminal device does not expect to perform PDCCH decoding on an overlapping resource in the "the following scenario", or the terminal device does not expect to perform decoding on the second PDCCH candidate based on configuration information of an SSS to which a linked PDCCH candidate (namely, the second PDCCH candidate) belongs in the "the following scenario", or the terminal device does not expect to perform decoding on the first PDCCH candidate based on configuration information of an SSS to which a PDCCH candidate (namely, the first PDCCH candidate) for individual transmission belongs in the "the following scenario". The foregoing "the following scenario" is: In a span other than a first span in a slot, one PDCCH candidate in a pair of linked PDCCH candidates and an individually transmitted PDCCH candidate meet "count one" conditions. A scenario shown in FIG. 8 is an example.

Optionally, before sending the first configuration information to the first terminal device, that is, when determining the first configuration information based on the first condition, the network device needs to determine that the first PDCCH candidate and the second PDCCH candidate do not meet at least one of a same time-frequency resource, a same scrambling sequence, a same control resource set, and a same DCI payload size. A protocol requirement is met only after the determining succeeds, and then the network device sends the first configuration information to the first terminal device.

For example, when the network device determines that the first PDCCH candidate and the second PDCCH candidate do not meet at least one of a same time-frequency resource, a same scrambling sequence, a same control resource set, and a same DCI payload size, the determining may be performed in the following two manners, but is not limited to the two manners.

Method a1: The network device first generates two PDCCH candidates, and then determines whether the two PDCCH candidates simultaneously have a same time-frequency resource, a same scrambling sequence, a same control resource set, and a same DCI payload size. If the two PDCCH candidates simultaneously have a same time-frequency resource, a same scrambling sequence, a same control resource set, and a same DCI payload size, the network device modifies configurations of the two PDCCH candidates until the two PDCCH candidates do not have a same time-frequency resource, a same scrambling sequence, a same control resource set, and a same DCI payload size simultaneously. In this way, the first PDCCH candidate and the second PDCCH candidate do not meet at least one of a same time-frequency resource, a same scrambling sequence, a same control resource set, and a same DCI payload size. According to Method a1, a relatively flexible configuration can be implemented, and it can be ensured that the configuration does not exceed a processing capability of the terminal device for determining the two PDCCH candidates. Method a2: The network device configures that the first PDCCH candidate and the second PDCCH candidate always do not meet one or more of the following conditions: a same time-frequency resource, a same scrambling sequence, a same control resource set, and a same DCI payload size, regardless of whether other remaining conditions are met. In this way, the first PDCCH candidate and the second PDCCH candidate do not meet at least one of a same time-frequency resource, a same scrambling sequence, a same control resource set, and a same DCI payload size. According to Method a2, complexity can be reduced, and system efficiency can be improved.

It should be understood that the foregoing methods are merely examples for describing the determining manners of the network device, and the network device may perform determining in another manner. For example, combinations can be performed based on a preset configuration; or for example, the first PDCCH candidate is first determined, and then the second PDCCH candidate is determined based on the first PDCCH candidate; or the second PDCCH candidate is first determined, and then the first PDCCH candidate is determined, or the like. Specifically, for example, configuration information of another PDCCH candidate may be determined based on an attribute or a value like a time-frequency resource, a scrambling sequence, a control resource set, or a monitored DCI payload size of one PDCCH candidate. This is not limited in this application. In an optional implementation, before the network device determines, in the foregoing plurality of manners, that the first PDCCH candidate and the second PDCCH candidate do not meet at least one of a same time-frequency resource, a same scrambling sequence, a same control resource set, and a same DCI payload size, the network device may further determine whether the first PDCCH candidate and the second PDCCH candidate are in a secondary cell (Scell) or in a span other than a first span in a slot. In an embodiment, there may be a plurality of span determining manners. For example, it may be determining a start OFDM symbol location or an end OFDM symbol location of a span in which the first PDCCH candidate and the second PDCCH candidate are located, or may be determining a sequence number of a span in which the first PDCCH candidate and the second PDCCH candidate are located. Certainly, another manner may be used, which is not enumerated herein.

In an implementation, the information indicating the first terminal device to monitor the PDCCH candidate based on the span and the configuration information of the first PDCCH candidate and the second PDCCH candidate may be sent by using one message, or may be sent by using two messages.

Step 902: The network device sends the first configuration information to the first terminal device, and correspondingly, the first terminal device receives the first configuration information from the network device.

Optionally, the information that is included in the first configuration information and that indicates the second terminal device to monitor the PDCCH candidate based on the span may be configured by using an R16 monitoring capability (r16monitoringcapability) parameter, or the first configuration information is the parameter, or the first configuration information may be implemented in another manner. This is not limited in this application.

In a plurality of terminal devices corresponding to a network device, some terminal devices may support to determine, in a span other than a first span, whether two PDCCH candidates have a same time-frequency resource, a same scrambling sequence, a same control resource set, and a same DCI payload size, and these terminal devices are referred to as first-type terminal devices in this application; and other terminal devices do not support to determine, in a span other than a first span, whether two PDCCH candidates have a same time-frequency resource, a same scrambling sequence, a same control resource set, and a same DCI payload size, and these terminal devices are referred to as second-type terminal devices in this application. In practice, the first terminal device may be the first-type terminal device, or may be the second-type terminal device. The first terminal device is not limited in this application.

The first-type terminal device and the second-type terminal device in the foregoing descriptions are merely descriptions introduced for ease of description, and may further have other descriptions. The descriptions are not intended to limit the terminal device. In this application, when a terminal device is described as the first-type terminal device, it actually indicates that the terminal device supports to determine, in a span other than a first span, whether two PDCCH candidates have a same time-frequency resource, a same scrambling sequence, a same control resource set, and a same DCI payload size. When a terminal device is described as the second-type terminal device, it actually indicates that the terminal device does not support to determine, in a span other than a first span, whether two PDCCH candidates have a same time-frequency resource, a same scrambling sequence, a same control resource set, and a same DCI payload size.

In a possible implementation, regardless of whether the first terminal device is the first-type terminal device or the second-type terminal device, after receiving the first configuration information, the first terminal device may perform Step 903a.

In still another possible implementation, when the first terminal device is the second-type terminal device, the first terminal device performs Step 903a after receiving the first configuration information; or when the first terminal device is the first-type terminal device, the first terminal device performs Step 903b after receiving the first configuration information.

Optionally, before the first terminal device performs Step 903a or Step 903b, the first terminal device may further determine whether the first PDCCH candidate and the second PDCCH candidate are in the Scell or in a span other than a first span in a slot. In an embodiment, there may be a plurality of span determining manners. For example, it may be determining a start OFDM symbol location or an end OFDM symbol location of a span in which the first PDCCH candidate and the second PDCCH candidate are located, or may be determining a sequence number of a span in which the first PDCCH candidate and the second PDCCH candidate are located. Certainly, another manner may be used, which is not enumerated herein.

Optionally, when the first terminal device is the second-type terminal device, before the first terminal device receives the first configuration information from the network device, the first terminal device sends first capability information to the network device, where the first capability information indicates that the first terminal device does not support to determine, in a span other than a first span, whether two PDCCH candidates have a same time-frequency resource, a same scrambling sequence, a same control resource set, and a same DCI payload size.

It should be noted that the two PDCCH candidates in the foregoing "determining whether two PDCCH candidates have a same time-frequency resource, a same scrambling sequence, a same control resource set, and a same DCI payload size" may be two PDCCH candidates in all PDCCH candidates in any span other than the first span. Principles in the following are the same. Refer to each other in the following.

Step 903a: The first terminal device performs decoding on the first PDCCH candidate and the second PDCCH candidate.

It should be noted that, in this application, performing decoding on a specific PDCCH candidate may alternatively be understood as performing decoding on the specific PDCCH candidate based on configuration information of an SSS to which the specific PDCCH candidate belongs. Principles in the following are the same. Refer to each other.

Step 903b: When determining that the first PDCCH candidate and the second PDCCH candidate meet some conditions of a same time-frequency resource, a same scrambling sequence, a same control resource set, and a same DCI payload size, the first terminal device determines that the configuration information that is of the first PDCCH candidate and the second PDCCH candidate and that is included in the first configuration information is error information.

Some conditions of a same time-frequency resource, a same scrambling sequence, a same control resource set, and a same downlink control information DCI payload size may be conditions determined by the network device and the first terminal device through negotiation, or conditions predefined in a communication protocol.

In this case, the first terminal device does not expect the first PDCCH candidate and the second PDCCH candidate to meet some conditions of a same time-frequency resource, a same scrambling sequence, a same control resource set, and a same downlink control information DCI payload size. It should be noted that, in the method in Step 903b, the first terminal device determines only some conditions, so that the first terminal device can reduce overheads. Optionally, when determining that the first PDCCH candidate and the second PDCCH candidate meet all conditions of a same time-frequency resource, a same scrambling sequence, a same control resource set, and a same downlink control information DCI payload size, the first terminal device may determine that the configuration information that is of the first PDCCH candidate and the second PDCCH candidate and that is included in the first configuration information is error information.

In an optional implementation, after the first terminal device determines that the configuration information that is of the first PDCCH candidate and the second PDCCH candidate and that is included in the first configuration information is error information, the first terminal device does not perform decoding on the first PDCCH candidate and/or the second PDCCH candidate; or the first terminal device does not perform decoding on the linked PDCCH candidates for repetition transmission.

This case may be understood as that the network device does not perform configuration according to a protocol constraint, and the first terminal device may consider that this scenario is a scenario that is not expected to be processed. Therefore, the first terminal device may not monitor a PDCCH candidate (namely, the first PDCCH candidate) for individual transmission; or the first terminal device may not monitor one PDCCH candidate (namely, the second PDCCH candidate) in the linked PDCCH candidates for repetition transmission; or the first terminal device may not monitor one PDCCH candidate (namely, the first PDCCH candidate) for individual transmission and one PDCCH candidate (namely, the second PDCCH candidate) in the linked PDCCH candidates for repetition transmission; or the first terminal device may not perform, based on configuration information of an SSS to which the PDCCH candidate for individual transmission belongs, decoding or monitoring on the PDCCH candidate for individual transmission; or the first terminal device may not perform, based on configuration information of an SSS to which the PDCCH candidate in the linked PDCCH candidates for repetition transmission belongs, decoding or monitoring on the PDCCH candidate in the linked PDCCH candidates for repetition transmission. In this case, the PDCCH candidate for individual transmission and the PDCCH candidate in the linked PDCCH candidates for repetition transmission meet the "count one" conditions. Alternatively, the first terminal device may not monitor the linked PDCCH candidates (namely, the two PDCCH candidates) for repetition transmission.

It should be noted that not monitor (not monitor) may also be replaced with not decode (not decode), not attempt to decode (not attempt to decode), or skip decoding (skip decoding).

According to the communication method provided in this application, the first terminal device can accurately determine whether DCI obtained through monitoring is repeatedly transmitted on a PDCCH or individually transmitted on a PDCCH, to avoid a problem of ambiguity of determining a reference point of scheduled data.

FIG. 10 shows another communication method according to an embodiment of this application. The method is applicable to the scenarios shown in FIG. 1a to FIG. 1d. Refer to FIG. 10. A specific procedure of the method may include the following steps.

Step 1001: A network device sends second configuration information to a second terminal device, and correspondingly, the second terminal device receives the second configuration information from the network device.

In an embodiment, the second configuration information includes information indicating the second terminal device to monitor a PDCCH candidate based on a span, and includes configuration information of a third PDCCH candidate and a fourth PDCCH candidate, and the third PDCCH candidate and the fourth PDCCH candidate have a same time-frequency resource, a same scrambling sequence, a same control resource set, and a same downlink control information DCI payload size. The third PDCCH candidate and the fourth PDCCH candidate are located in a span other than a first span in a slot, the third PDCCH candidate and the fourth PDCCH candidate are located in the same span, the third PDCCH candidate is a PDCCH for individual transmission, and the fourth PDCCH candidate is a PDCCH candidate in linked PDCCH candidates for repetition transmission. In an implementation of this application, the fourth PDCCH candidate may be any PDCCH candidate in the linked PDCCH candidates for repetition transmission.

The information that is included in the second configuration information and that indicates the second terminal device to monitor the PDCCH candidate based on the span may be configured by using a parameter r16monitoringcapability.

In an optional implementation, before the second terminal device receives the second configuration information from the network device, the second terminal device may send second capability information to the network device. The second capability information indicates that the second terminal device supports to determine, in a span other than a first span, whether two PDCCH candidates have a same time-frequency resource, a same scrambling sequence, a same control resource set, and a same DCI payload size. Further, the network device may determine the second configuration information based on the second capability information.

Optionally, because the second terminal device has the second capability information, in the configuration information that is of the third PDCCH candidate and the fourth PDCCH candidate and that is included in the second configuration information, the third PDCCH candidate and the fourth PDCCH candidate may be configured to have a same time-frequency resource, a same scrambling sequence, a same control resource set, and a same downlink control information DCI payload size, or may be configured to meet some conditions of a same time-frequency resource, a same scrambling sequence, a same control resource set, and a same downlink control information DCI payload size, or may be configured to not meet all conditions of a same time-frequency resource, a same scrambling sequence, a same control resource set, and a same downlink control information DCI payload size.

In an implementation, the information indicating the second terminal device to monitor the PDCCH candidate based on the span and the configuration information of the third PDCCH candidate and the fourth PDCCH candidate may be sent by using one message, or may be sent by using two or more pieces of configuration information.

Step 1002: The second terminal device determines, based on the second configuration information, that the third PDCCH candidate and the fourth PDCCH candidate meet some conditions of a same time-frequency resource, a same scrambling sequence, a same control resource set, and a same DCI payload size.

In this scenario, when the second terminal device determines that the third PDCCH candidate and the fourth PDCCH candidate meet some conditions of a same time-frequency resource, a same scrambling sequence, a same control resource set, and a same DCI payload size, it indicates that the second terminal device determines that the third PDCCH candidate and the fourth PDCCH candidate may be counted as one blind detection. In this way, the second terminal device may perform the determining by determining some conditions. This reduces overheads of the second terminal device.

For example, some conditions of a same time-frequency resource, a same scrambling sequence, a same control resource set, and a same DCI payload size, that the third PDCCH candidate and the fourth PDCCH candidate meet, may be conditions determined by the network device and the second terminal device through negotiation, or conditions predefined in a communication protocol. In an optional implementation, before the second terminal device performs Step 1002, the second terminal device may further determine whether the third PDCCH candidate and the fourth PDCCH candidate are in a Scell or in a span other than a first span in a slot. In an embodiment, there may be a plurality of span determining manners. For example, it may be determining a start OFDM symbol location or an end OFDM symbol location of a span in which the third PDCCH candidate and the fourth PDCCH candidate are located, or may be determining a sequence number of a span in which the third PDCCH candidate and the fourth PDCCH candidate are located. Certainly, another manner may be used, which is not enumerated herein.

Optionally, the second terminal device may also determine, based on the second configuration information, that the third PDCCH candidate and the fourth PDCCH candidate meet all conditions of a same time-frequency resource, a same scrambling sequence, a same control resource set, and a same DCI payload size, so that the second terminal device determines that the third PDCCH candidate and the fourth PDCCH candidate may be counted as one blind detection.

It should be noted that when the second terminal device determines that the third PDCCH candidate and the fourth PDCCH candidate meet some or all of the conditions of a same time-frequency resource, a same scrambling sequence, a same control resource set, and a same DCI payload size, for specific content that the third PDCCH candidate and the fourth PDCCH candidate have a same time-frequency resource, a same scrambling sequence, a same control resource set, and a same DCI payload size, refer to the related descriptions in Step 901. Details are not described herein again.

Step 1003: The second terminal device performs decoding on the third PDCCH candidate and/or the fourth PDCCH candidate.

For example, the second terminal device assumes that the network device sends a PDCCH on the third PDCCH candidate, and performs decoding on the third PDCCH candidate; or the second terminal device assumes that the network device sends a PDCCH on the fourth PDCCH candidate, and performs decoding on the fourth PDCCH candidate.

According to the communication method provided in this application, the second terminal device can accurately determine whether DCI obtained through monitoring is repeatedly transmitted on a PDCCH or individually transmitted on a PDCCH, to avoid a problem of ambiguity of determining a reference point of scheduled data.

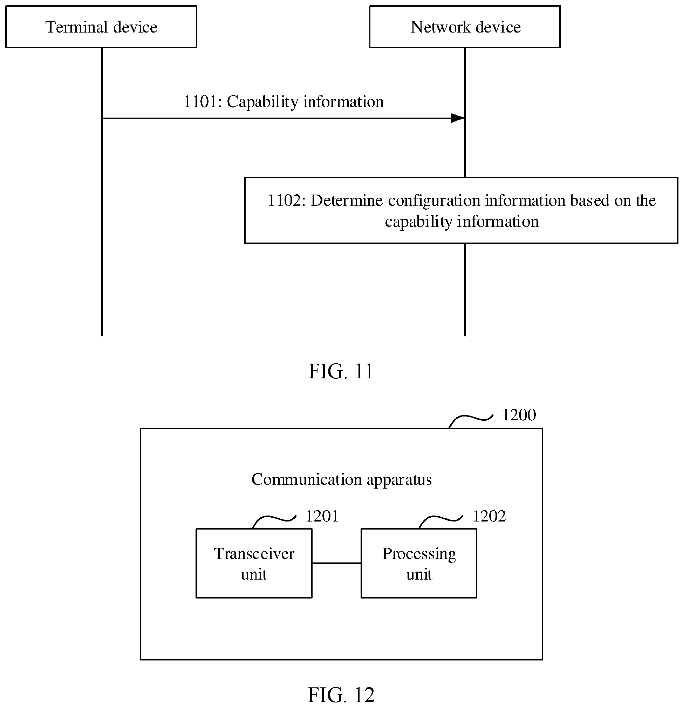

FIG. 11 shows another communication method according to an embodiment of this application. The method is applicable to the scenarios shown in FIG. 1a to FIG. 1d. Refer to FIG. 11. A specific procedure of the method may include the following steps.

Step 1101: A terminal device sends capability information to a network device, where the capability information indicates whether the terminal device supports to determine, in a span other than a first span, whether two PDCCH candidates have a same time-frequency resource, a same scrambling sequence, a same control resource set, and a same DCI payload size.

In other words, the capability information indicates that the terminal device supports to determine, in a span other than a first span, whether two PDCCH candidates have a same time-frequency resource, a same scrambling sequence, a same control resource set, and a same DCI payload size, or the capability information indicates that the terminal device does not support to determine, in a span other than a first span, whether two PDCCH candidates have a same time-frequency resource, a same scrambling sequence, a same control resource set, and a same DCI payload size.

Step 1102: The network device determines configuration information based on the capability information.

In this way, the network device may send different configuration information to different terminal devices.

In a first optional implementation, when the capability information indicates that the terminal device supports to determine, in a span other than a first span, whether two PDCCH candidates have a same time-frequency resource, a same scrambling sequence, a same control resource set, and a same DCI payload size, the network device may determine the configuration information according to a current method in the protocol R17. In this case, for the configuration information, refer to the related descriptions of the second configuration information in the embodiment shown in FIG. 10.

To be specific, in the configuration information that is of the third PDCCH candidate and the fourth PDCCH candidate and that is included in the configuration information, the third PDCCH candidate and the fourth PDCCH candidate may be configured to have a same time-frequency resource, a same scrambling sequence, a same control resource set, and a same downlink control information DCI payload size, or may be configured to meet some conditions of a same time-frequency resource, a same scrambling sequence, a same control resource set, and a same downlink control information DCI payload size, or may be configured to not meet all conditions of a same time-frequency resource, a same scrambling sequence, a same control resource set, and a same downlink control information DCI payload size.

Correspondingly, after receiving the configuration information, the terminal device may perform a corresponding operation according to the current method in R17. For example, the terminal device determines whether the third PDCCH candidate and the fourth PDCCH candidate have a same time-frequency resource, a same scrambling sequence, a same control resource set, and a same downlink control information DCI payload size.

Optionally, the terminal device may also perform the operations of the second terminal device in the embodiment shown in FIG. 10. Refer to each other. Details are not described herein again.

In a second optional implementation, when the capability information indicates that the terminal device does not support to determine, in a span other than a first span, whether two PDCCH candidates have a same time-frequency resource, a same scrambling sequence, a same control resource set, and a same DCI payload size, the network device may determine the configuration information according to the method in the embodiment shown in FIG. 9. In this case, for the configuration information, refer to the related descriptions of the first configuration information in the embodiment shown in FIG. 9.

Correspondingly, after receiving the configuration information, the terminal device may perform the operation of Step 903a in the embodiment shown in FIG. 9. For details, refer to each other, and details are not described herein again.

According to the communication method provided in this application, the terminal device can accurately determine whether DCI obtained through monitoring is repeatedly transmitted on a PDCCH or individually transmitted on a PDCCH, to avoid a problem of ambiguity of determining a reference point of scheduled data.

Based on the foregoing embodiments, an embodiment of this application further provides a communication apparatus. Refer to FIG. 12. A communication apparatus 1200 may include a transceiver unit 1201 and a processing unit 1202. The transceiver unit 1201 is used by the communication apparatus 1200 to receive information (a message or data) or send information (a message or data), and the processing unit 1202 is configured to control and manage an action of the communication apparatus 1200. The processing unit 1202 may further control the transceiver unit 1201 to perform a step.

For example, the communication apparatus 1200 may be specifically the network device in the foregoing embodiments, or a processor, a chip, a chip system, a functional module, or the like of the network device; or the communication apparatus 1200 may be specifically the first terminal device in the foregoing embodiments, or a processor, a chip, a chip system, a functional module, or the like of the first terminal device; or the communication apparatus 1200 may be specifically the second terminal device in the foregoing embodiments, or a processor, a chip, a chip system, a functional module, or the like of the second terminal device.

In an embodiment, when the communication apparatus 1200 is configured to implement a function of the network device in the embodiments shown in FIG. 9 and FIG. 10, the following may be specifically included.

The processing unit 1202 is configured to determine first configuration information based on a first condition, where the first configuration information includes information indicating a first terminal device to monitor a physical downlink control channel PDCCH candidate based on a span, and includes configuration information of a first PDCCH candidate and a second PDCCH candidate, and the first condition is that the first PDCCH candidate and the second PDCCH candidate do not meet at least one of a same time-frequency resource, a same scrambling sequence, a same control resource set, and a same downlink control information DCI payload size. The first PDCCH candidate and the second PDCCH candidate are located in a span other than a first span in a slot, the first PDCCH candidate and the second PDCCH candidate are located in the same span, the first PDCCH candidate is a PDCCH for individual transmission, and the second PDCCH candidate is any PDCCH candidate in linked PDCCH candidates for repetition transmission. The transceiver unit 1201 is configured to send the first configuration information to the first terminal device.

In an optional implementation, the transceiver unit 1201 is further configured to: before the processing unit 1202 determines the first configuration information based on the first condition, receive first capability information from the first terminal device, where the first capability information indicates that the first terminal device does not support to determine, in a span other than a first span, whether two PDCCH candidates have a same time-frequency resource, a same scrambling sequence, a same control resource set, and a same DCI payload size.

For example, the transceiver unit 1201 is further configured to receive second capability information from a second terminal device, where the second capability information indicates that the second terminal device supports to determine, in a span other than a first span, whether two PDCCH candidates have a same time-frequency resource, a same scrambling sequence, a same control resource set, and a same DCI payload size. Then, the processing unit 1202 is further configured to determine second configuration information based on the second capability information, where the second configuration information includes indicating the second terminal device to monitor a PDCCH candidate based on a span, and includes configuration information of a third PDCCH candidate and a fourth PDCCH candidate, and the third PDCCH candidate and the fourth PDCCH candidate have a same time-frequency resource, a same scrambling sequence, a same control resource set, and a same DCI payload size. The third PDCCH candidate and the fourth PDCCH candidate are located in a span other than a first span in a slot, the third PDCCH candidate and the fourth PDCCH candidate are located in the same span, the third PDCCH candidate is a PDCCH for individual transmission, and the fourth PDCCH candidate is any PDCCH candidate in linked PDCCH candidates for repetition transmission.

In another embodiment, when the communication apparatus 1200 is configured to implement a function of the first terminal device in the embodiment shown in FIG. 9, the following may be specifically included.

The transceiver unit 1201 is configured to receive first configuration information from a network device, where the first configuration information includes information indicating the first terminal device to monitor a physical downlink control channel PDCCH candidate based on a span, and includes configuration information of a first PDCCH candidate and a second PDCCH candidate, and the first PDCCH candidate and the second PDCCH candidate do not meet at least one of a same time-frequency resource, a same scrambling sequence, a same control resource set, and a same downlink control information DCI payload size. The first PDCCH candidate and the second PDCCH candidate are located in a span other than a first span in a slot, the first PDCCH candidate and the second PDCCH candidate are located in the same span, the first PDCCH candidate is a PDCCH for individual transmission, and the second PDCCH candidate is any PDCCH candidate in linked PDCCH candidates for repetition transmission. The processing unit 1202 is configured to perform decoding separately on the first PDCCH candidate and the second PDCCH candidate. In an optional implementation, before receiving the first configuration information from the network device, the transceiver unit 1201 is further configured to send first capability information to the network device, where the first capability information indicates that the first terminal device does not support to determine, in a span other than a first span, whether two PDCCH candidates have a same time-frequency resource, a same scrambling sequence, a same control resource set, and a same DCI payload size.

In another embodiment, when the communication apparatus 1200 is configured to implement a function of the second terminal device in the embodiment shown in FIG. 10, the following may be specifically included.

The transceiver unit 1201 is configured to receive second configuration information from a network device, where the second configuration information includes information indicating the second terminal device to monitor a physical downlink control channel PDCCH candidate based on a span, and includes configuration information of a third PDCCH candidate and a fourth PDCCH candidate, and the third PDCCH candidate and the fourth PDCCH candidate have a same time-frequency resource, a same scrambling sequence, a same control resource set, and a same downlink control information DCI payload size, where the third PDCCH candidate and the fourth PDCCH candidate are located in a span other than a first span in a slot, the third PDCCH candidate and the fourth PDCCH candidate are located in the same span, the third PDCCH candidate is a PDCCH for individual transmission, and the fourth PDCCH candidate is any PDCCH candidate in linked PDCCH candidates for repetition transmission. The processing unit 1202 is configured to: determine, based on the second configuration information, that the third PDCCH candidate and the fourth PDCCH candidate meet some conditions of a same time-frequency resource, a same scrambling sequence, a same control resource set, and a same DCI payload size; and then perform decoding on the third PDCCH candidate and/or the fourth PDCCH candidate.

In an optional implementation, before receiving the second configuration information from the network device, the transceiver unit 1201 is further configured to send second capability information to the network device, where the second capability information indicates that the second terminal device supports to determine, in a span other than a first span, whether two PDCCH candidates have a same time-frequency resource, a same scrambling sequence, a same control resource set, and a same DCI payload size.

For example, some conditions of same time-frequency resource, a same scrambling sequence, a same control resource set, and a same DCI payload size, that the third PDCCH candidate and the fourth PDCCH candidate meet, are conditions determined by the network device and the second terminal device through negotiation, or conditions predefined in a communication protocol.

It should be noted that, in embodiments of this application, division into units is an example, and is merely a logical function division. During actual implementation, there may be another division manner. Functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an individual product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes: any medium that can store program code, for example, a USB flash drive, a removable hard disk, a read-only memory (read-only memory, ROM), a random access memory (random access memory, RAM), a magnetic disk, or an optical disc.

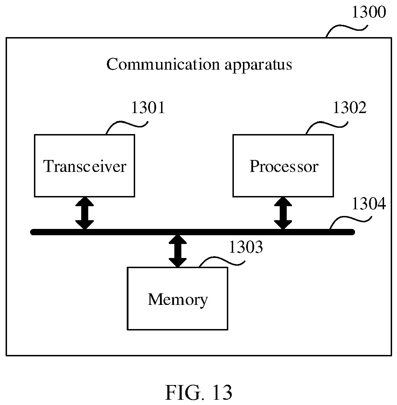

Based on the foregoing embodiments, an embodiment of this application further provides a communication apparatus. Refer to FIG. 13. A communication apparatus 1300 may include a transceiver 1301 and a processor 1302. Optionally, the communication apparatus 1300 may further include a memory 1303. The memory 1303 may be disposed inside the communication apparatus 1300, or may be disposed outside the communication apparatus 1300. The processor 1302 may control the transceiver 1301 to receive and send information, a message, data, or the like. Specifically, the processor 1302 may be a central processing unit (central processing unit, CPU), a network processor (network processor, NP), or a combination of the CPU and the NP. The processor 1302 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The transceiver 1301, the processor 1302, and the memory 1303 are connected to each other. Optionally, the transceiver 1301, the processor 1302, and the memory 1303 are connected to each other through a bus 1304. The bus 1304 may be a peripheral component interconnect (Peripheral Component Interconnect, PCI) bus, an extended industry standard architecture (Extended Industry Standard Architecture, EISA) bus, or the like. The bus may be classified into an address bus, a data bus, a control bus, and the like. For ease of representation, only one bold line is used to represent the bus in FIG. 13, but this does not mean that there is only one bus or only one type of bus.

In an optional implementation, the memory 1303 is configured to store a program and the like. Specifically, the program may include program code, and the program code includes computer operation instructions. The memory 1303 may include a RAM, and may further include a non-volatile memory (non-volatile memory), for example, one or more disk memories. The processor 1302 executes the application program stored in the memory 1303, to implement the foregoing function, thereby implementing a function of the communication apparatus 1300.

For example, the communication apparatus 1300 may be the network device in the foregoing embodiments, or may be the first terminal device in the foregoing embodiments, or may be the second terminal device in the foregoing embodiments.

In an embodiment, when the communication apparatus 1300 implements a function of the network device in the embodiment shown in FIG. 9 or FIG. 10, the transceiver 1301 may implement a transceiver operation performed by the network device in the embodiment shown in FIG. 9 or FIG. 10. The processor 1302 may implement an operation other than the transceiver operation performed by the network device in the embodiment shown in FIG. 9 or FIG. 10. Specifically, for related specific descriptions, refer to the related descriptions in the embodiment shown in FIG. 9 or FIG. 10. Details are not described herein again.

In another embodiment, when the communication apparatus 1300 implements a function of the first terminal device in the embodiment shown in FIG. 9, the transceiver 1301 may implement a transceiver operation performed by the first terminal device in the embodiment shown in FIG. 9; and the processor 1302 may implement an operation other than the transceiver operation performed by the first terminal device in the embodiment shown in FIG. 9. Specifically, for related specific descriptions, refer to the related descriptions in the embodiment shown in FIG. 9. Details are not described herein again.

In another embodiment, when the communication apparatus 1300 implements a function of the second terminal device in the embodiment shown in FIG. 10, the transceiver 1301 may implement a transceiver operation performed by the second terminal device in the embodiment shown in FIG. 10; and the processor 1302 may implement an operation other than the transceiver operation performed by the second terminal device in the embodiment shown in FIG. 10. Specifically, for related specific descriptions, refer to the related descriptions in the embodiment shown in FIG. 10. Details are not described herein again.

According to the foregoing embodiments, an embodiment of this application provides a communication system, and the communication system may include the network device, the first terminal device, the second terminal device, and the like in the foregoing embodiments.

An embodiment of this application further provides a computer-readable storage medium. The computer-readable storage medium is configured to store a computer program. When the computer program is executed by a computer, the computer may implement the communication method provided in the method embodiments.

An embodiment of this application further provides a computer program product. The computer program product is configured to store a computer program. When the computer program is executed by a computer, the computer may implement the communication method provided in the foregoing method embodiments.

An embodiment of this application further provides a chip, including a processor. The processor is coupled to a memory, and is configured to invoke a program in the memory, so that the chip implements the communication method provided in the foregoing method embodiments.

An embodiment of this application further provides a chip. The chip is coupled to a memory, and the chip is configured to implement the communication method provided in the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of the claims of this application and their equivalent technologies.

**Claims**

1. A communication method, comprising:

   determining, by a network device, first configuration information based on a first condition, wherein the first configuration information comprises information indicating a first terminal device to monitor a physical downlink control channel PDCCH candidate based on a span, and comprises configuration information of a first PDCCH candidate and a second PDCCH candidate, and the first condition is that the first PDCCH candidate and the second PDCCH candidate do not meet at least one of a same time-frequency resource, a same scrambling sequence, a same control resource set, and a same downlink control information DCI payload size, wherein

the first PDCCH candidate and the second PDCCH candidate are located in a span other than a first span in a slot, the first PDCCH candidate and the second PDCCH candidate are located in the same span, the first PDCCH candidate is a PDCCH for individual transmission, and the second PDCCH candidate is any PDCCH candidate in linked PDCCH candidates for repetition transmission; and

sending, by the network device, the first configuration information to the first terminal device.

2. The method according to claim 1, wherein before the determining, by a network device, first configuration information based on a first condition, the method further comprises:

receiving, by the network device, first capability information from the first terminal device, wherein the first capability information indicates that the first terminal device does not support to determine, in a span other than a first span, whether two PDCCH candidates have a same time-frequency resource, a same scrambling sequence, a same control resource set, and a same DCI payload size.

3. The method according to claim 1 or 2, wherein the method further comprises:

receiving, by the network device, second capability information from a second terminal device, wherein the second capability information indicates that the second terminal device supports to determine, in a span other than a first span, whether two PDCCH candidates have a same time-frequency resource, a same scrambling sequence, a same control resource set, and a same DCI payload size; and

determining, by the network device, second configuration information based on the second capability information, wherein the second configuration information comprises indicating the second terminal device to monitor a PDCCH candidate based on a span, and comprises configuration information of a third PDCCH candidate and a fourth PDCCH candidate, and the third PDCCH candidate and the fourth PDCCH candidate have a same time-frequency resource, a same scrambling sequence, a same control resource set, and a same DCI payload size, wherein the third PDCCH candidate and the fourth PDCCH candidate are located in a span other than a first span in a slot, the third PDCCH candidate and the fourth PDCCH candidate are located in the same span, the third PDCCH candidate is a PDCCH for individual transmission, and the fourth PDCCH candidate is any PDCCH candidate in linked PDCCH candidates for repetition transmission.

4. A communication method, comprising:

receiving, by a first terminal device, first configuration information from a network device, wherein the first configuration information comprises information indicating the first terminal device to monitor a physical downlink control channel PDCCH candidate based on a span, and comprises configuration information of a first PDCCH candidate and a second PDCCH candidate, and the first PDCCH candidate and the second PDCCH candidate do not meet at least one of a same time-frequency resource, a same scrambling sequence, a same control resource set, and a same downlink control information DCI payload size, wherein

the first PDCCH candidate and the second PDCCH candidate are located in a span other than a first span in a slot, the first PDCCH candidate and the second PDCCH candidate are located in the same span, the first PDCCH candidate is a PDCCH for individual transmission, and the second PDCCH candidate is any PDCCH candidate in linked PDCCH candidates for repetition transmission; and

performing, by the first terminal device, decoding separately on the first PDCCH candidate and the second PDCCH candidate.

5. The method according to claim 4, wherein before the receiving, by a first terminal device, first configuration information from a network device, the method further comprises:

sending, by the first terminal device, first capability information to the network device, wherein the first capability information indicates that the first terminal device does not support to determine, in a span other than a first span, whether two PDCCH candidates have a same time-frequency resource, a same scrambling sequence, a same control resource set, and a same DCI payload size.

6. A communication method, comprising:

receiving, by a second terminal device, second configuration information from a network device, wherein the second configuration information comprises information indicating the second terminal device to monitor a physical downlink control channel PDCCH candidate based on a span, and comprises configuration information of a third PDCCH candidate and a fourth PDCCH candidate, and the third PDCCH candidate and the fourth PDCCH candidate have a same time-frequency resource, a same scrambling sequence, a same control resource set, and a same downlink control information DCI payload size, wherein the third PDCCH candidate and the fourth PDCCH candidate are located in a span other than a first span in a slot, the third PDCCH candidate and the fourth PDCCH candidate are located in the same span, the third PDCCH candidate is a PDCCH for individual transmission, and the fourth PDCCH candidate is any PDCCH candidate in linked PDCCH candidates for repetition transmission;
determining, by the second terminal device based on the second configuration information, that the third PDCCH candidate and the fourth PDCCH candidate meet some conditions of a same time-frequency resource, a same scrambling sequence, a same control resource set, and a same DCI payload size; and
performing, by the second terminal device, decoding on the third PDCCH candidate and/or the fourth PDCCH candidate.

7. The method according to claim 6, wherein before the receiving, by a second terminal device, second configuration information from a network device, the method further comprises:
sending, by the second terminal device, second capability information to the network device, wherein the second capability information indicates that the second terminal device supports to determine, in a span other than a first span, whether two PDCCH candidates have a same time-frequency resource, a same scrambling sequence, a same control resource set, and a same DCI payload size.

8. The method according to claim 6 or 7, wherein some conditions of a same time-frequency resource, a same scrambling sequence, a same control resource set, and a same DCI payload size, that the third PDCCH candidate and the fourth PDCCH candidate meet, are conditions determined by the network device and the second terminal device through negotiation, or conditions predefined in a communication protocol.

9. A communication apparatus, comprising:

a processing unit, configured to determine first configuration information based on a first condition, wherein the first configuration information comprises information indicating a first terminal device to monitor a physical downlink control channel PDCCH candidate based on a span, and comprises configuration information of a first PDCCH candidate and a second PDCCH candidate, and the first condition is that the first PDCCH candidate and the second PDCCH candidate do not meet at least one of a same time-frequency resource, a same scrambling sequence, a same control resource set, and a same downlink control information DCI payload size, wherein
the first PDCCH candidate and the second PDCCH candidate are located in a span other than a first span in a slot, the first PDCCH candidate and the second PDCCH candidate are located in the same span, the first PDCCH candidate is a PDCCH for individual transmission, and the second PDCCH candidate is any PDCCH candidate in linked PDCCH candidates for repetition transmission; and
a transceiver unit, configured to send the first configuration information to the first terminal device.

10. The apparatus according to claim 9, wherein the transceiver unit is further configured to:
before the processing unit determines the first configuration information based on the first condition, receive first capability information from the first terminal device, wherein the first capability information indicates that the first terminal device does not support to determine, in a span other than a first span, whether two PDCCH candidates have a same time-frequency resource, a same scrambling sequence, a same control resource set, and a same DCI payload size.

11. The apparatus according to claim 9 or 10, wherein the transceiver unit is further configured to:

receive second capability information from a second terminal device, wherein the second capability information indicates that the second terminal device supports to determine, in a span other than a first span, whether two PDCCH candidates have a same time-frequency resource, a same scrambling sequence, a same control resource set, and a same DCI payload size; and
the processing unit is further configured to:
determine second configuration information based on the second capability information, wherein the second configuration information comprises indicating the second terminal device to monitor a PDCCH candidate based on a span, and comprises configuration information of a third PDCCH candidate and a fourth PDCCH candidate, and the third PDCCH candidate and the fourth PDCCH candidate have a same time-frequency resource, a same scrambling sequence, a same control resource set, and a same DCI payload size, wherein the third PDCCH candidate and the fourth PDCCH candidate are located in a span other than a first span in a slot, the third PDCCH candidate and the fourth PDCCH candidate are located in the same span, the third PDCCH candidate is a PDCCH for individual transmission, and the fourth PDCCH candidate is any PDCCH candidate in linked PDCCH candidates for repetition transmission.

12. A communication apparatus, comprising:

a transceiver unit, configured to receive first configuration information from a network device, wherein the first configuration information comprises information indicating the first terminal device to monitor a physical downlink control channel PDCCH candidate based on a span, and comprises configuration information of a first PDCCH candidate and a second PDCCH candidate, and the first PDCCH candidate and the second PDCCH candidate do not meet at least one of a same time-frequency resource, a same scrambling sequence, a same control resource set, and a same downlink control information DCI payload size, wherein the first PDCCH candidate and the second PDCCH candidate are located in a span other than a first span in a slot, the first PDCCH candidate and the second PDCCH candidate are located in the same span, the first PDCCH candidate is a PDCCH for individual transmission, and the second PDCCH candidate is any PDCCH candidate in linked PDCCH candidates for repetition transmission; and
a processing unit, configured to perform decoding separately on the first PDCCH candidate and the second PDCCH candidate.

13. The apparatus according to claim 12, wherein before receiving the first configuration information from the network device, the transceiver unit is further configured to:
send first capability information to the network device, wherein the first capability information indicates that the first terminal device does not support to determine, in a span other than a first span, whether two PDCCH candidates have a same time-frequency resource, a same scrambling sequence, a same control resource set, and a same DCI payload size.

14. A communication apparatus, comprising:

a transceiver unit, configured to receive second configuration information from a network device, wherein the second configuration information comprises information indicating the second terminal device to monitor a physical downlink control channel PDCCH candidate based on a span, and comprises configuration information of a third PDCCH candidate and a fourth PDCCH candidate, and the third PDCCH candidate and the fourth PDCCH candidate have a same time-frequency resource, a same scrambling sequence, a same control resource set, and a same downlink control information DCI payload size, wherein the third PDCCH candidate and the fourth PDCCH candidate are located in a span other than a first span in a slot, the third PDCCH candidate and the fourth PDCCH candidate are located in the same span, the third PDCCH candidate is a PDCCH for individual transmission, and the fourth PDCCH candidate is any PDCCH candidate in linked PDCCH candidates for repetition transmission; and
a processing unit, configured to determine, based on the second configuration information, that the third PDCCH candidate and the fourth PDCCH candidate meet some conditions of a same time-frequency resource, a same scrambling sequence, a same control resource set, and a same DCI payload size; and
perform decoding on the third PDCCH candidate and/or the fourth PDCCH candidate.

15. The apparatus according to claim 14, wherein before receiving the second configuration information from the network device, the transceiver unit is further configured to:
send second capability information to the network device, wherein the second capability information indicates that the second terminal device supports to determine, in a span other than a first span, whether two PDCCH candidates have a same time-frequency resource, a same scrambling sequence, a same control resource set, and a same DCI payload size.

16. The apparatus according to claim 14 or 15, wherein some conditions of a same time-frequency resource, a same scrambling sequence, a same control resource set, and a same DCI payload size, that the third PDCCH candidate and the fourth PDCCH candidate meet, are conditions determined by the network device and the second terminal device through negotiation, or conditions predefined in a communication protocol.

17. A communication apparatus, comprising a memory, a processor, and a transceiver, wherein

the memory is configured to store computer instructions;
the transceiver is configured to receive and send information; and
the processor is coupled to the memory, and is configured to invoke the computer instructions in the memory, to perform the method according to any one of claims 1 to 3 by using the transceiver.

18. A communication apparatus, comprising a memory, a processor, and a transceiver, wherein

the memory is configured to store computer instructions;
the transceiver is configured to receive and send information; and
the processor is coupled to the memory, and is configured to invoke the computer instructions in the memory, to perform the method according to either of claims 4 and 5 by using the transceiver.

19. A communication apparatus, comprising a memory, a processor, and a transceiver, wherein

the memory is configured to store computer instructions;
the transceiver is configured to receive and send information; and
the processor is coupled to the memory, and is configured to invoke the computer instructions in the memory, to perform the method according to any one of claims 6 to 8 by using the transceiver.

20. A computer-readable storage medium, wherein the computer-readable storage medium stores computer-executable instructions, and when the computer-executable instructions are invoked by a computer, the method according to any one of claims 1 to 3, the method according to either of claims 4 and 5, or the method according to any one of claims 6 to 8 is performed.

21. A computer program product, comprising instructions, wherein when the instructions are run on a computer, the method according to any one of claims 1 to 3, the method according to either of claims 4 and 5, or the method according to any one of claims 6 to 8 is performed.

22. A chip, wherein the chip is coupled to a memory, and is configured to read and execute program instructions stored in the memory, to implement the method according to any one of claims 1 to 3, the method according to either of claims 4 and 5, or the method according to any one of claims 6 to 8.

Point-to-point single
connectivity

Terminal device

Network device

FIG. 1a

Network device

Multi-hop single connectivity

Terminal device

FIG. 1b

Dual connectivity DC

FIG. 1c

Multi-hop multi-connectivity

FIG. 1d

FIG. 2

FIG. 3

First PDCCH candidate    Linked    Second PDCCH candidate

Third PDCCH candidate

Count one
(counted as one blind
detection)

FIG. 4

First PDCCH candidate    Linked    Second PDCCH candidate

Third PDCCH candidate

Count one
(counted as one
blind detection)

FIG. 5

FIG. 6

FIG. 7

FIG. 8

| Network device | First terminal device |
| --- | --- |

901: Determine first configuration information based on a first condition

902: First configuration information

903a: Perform decoding on a first PDCCH candidate and a second PDCCH candidate

903b: When determining that the first PDCCH candidate and the second PDCCH candidate meet some conditions of a same time-frequency resource, a same scrambling sequence, a same control resource set, and a same downlink control information DCI payload size, determine that configuration information that is of the first PDCCH candidate and the second PDCCH candidate and that is included in the first configuration information is error information

FIG. 9

| Network device | Second terminal device |
| --- | --- |

1001: Second configuration information

1002: Determine, based on the second configuration information, that a third PDCCH candidate and a fourth PDCCH candidate meet some conditions of a same time-frequency resource, a same scrambling sequence, a same control resource set, and a same DCI payload size

1003: Perform decoding on the third PDCCH candidate and/or the fourth PDCCH candidate

FIG. 10

| Terminal device | | Network device |
|---|---|---|

1101: Capability information →

1102: Determine configuration information based on the capability information

**FIG. 11**

1200

Communication apparatus

1201

| Transceiver unit |
|---|

1202

| Processing unit |
|---|

**FIG. 12**

1300

Communication apparatus

1301

Transceiver

1302

Processor

1304

1303

Memory

FIG. 13

<table>
<tr><td colspan="2" align="center">**INTERNATIONAL SEARCH REPORT**</td><td colspan="2">International application No.<br>**PCT/CN2022/143218**</td></tr>
<tr><td colspan="4">**A. CLASSIFICATION OF SUBJECT MATTER**<br>H04W 72/04(2023.01)i<br><br>According to International Patent Classification (IPC) or to both national classification and IPC</td></tr>
<tr><td colspan="4">**B. FIELDS SEARCHED**</td></tr>
<tr><td colspan="4">Minimum documentation searched (classification system followed by classification symbols)<br>IPC:H04W,H04Q</td></tr>
<tr><td colspan="4">Documentation searched other than minimum documentation to the extent that such documents are included in the fields searched</td></tr>
<tr><td colspan="4">Electronic data base consulted during the international search (name of data base and, where practicable, search terms used)<br>WPI, EPODOC, CNKI, CNPAT, 3GPP: 网络设备, 时间跨度, 监听, 物理下行控制信道, 候选, 扰码, 控制资源集合, 重复传输, network equipment, time span, monitor, PDCCH, candidate, scrambling code, control resource set, repeated transmission</td></tr>
<tr><td colspan="4">**C. DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>A</td><td colspan="2">CN 112399580 A (HUAWEI TECHNOLOGIES CO., LTD.) 23 February 2021 (2021-02-23) description, paragraphs [0006]-[0067]</td><td>1-22</td></tr>
<tr><td>A</td><td colspan="2">CN 111093270 A (ZTE CORP.) 01 May 2020 (2020-05-01) entire document</td><td>1-22</td></tr>
<tr><td>A</td><td colspan="2">CN 112399618 A (HUAWEI TECHNOLOGIES CO., LTD.) 23 February 2021 (2021-02-23) entire document</td><td>1-22</td></tr>
<tr><td>A</td><td colspan="2">US 2020029310 A1 (QUALCOMM INC.) 23 January 2020 (2020-01-23) entire document</td><td>1-22</td></tr>
<tr><td>A</td><td colspan="2">QUALCOMM INC. "Feature Lead Summery on Initial Access Signals and Channels for NR-U"<br>*3GPP TSG RAN WG1 Meeting #96Bis R1-1905785*, 12 April 2019 (2019-04-12), entire document</td><td>1-22</td></tr>
</table>

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 February 2023** | **22 February 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
Information on patent family members

International application No.

**PCT/CN2022/143218**

| Patent document cited in search report | | | Publication date (day/month/year) | Patent family member(s) | | | Publication date (day/month/year) |
|---|---|---|---|---|---|---|---|
| CN | 112399580 | A | 23 February 2021 | None | | | |
| CN | 111093270 | A | 01 May 2020 | EP | 3965499 | A1 | 09 March 2022 |
| | | | | JP | 2022532511 | A | 15 July 2022 |
| | | | | US | 2022201691 | A1 | 23 June 2022 |
| | | | | WO | 2020221287 | A1 | 05 November 2020 |
| CN | 112399618 | A | 23 February 2021 | None | | | |
| US | 2020029310 | A1 | 23 January 2020 | WO | 2020018268 | A1 | 23 January 2020 |
| | | | | EP | 3824583 | A1 | 26 May 2021 |

Form PCT/ISA/210 (patent family annex) (July 2022)

**EP 4 447 585 A1**

**REFERENCES CITED IN THE DESCRIPTION**

**Patent documents cited in the description**

- CN 202111672841